# EUROPEAN PATENT SPECIFICATION

(11) **EP 3 989 621 B1**
(45) Date of publication and mention of the grant of the patent: **10.09.2025**
(21) Application number: 20836463.8
(22) Date of filing: 07.07.2020
(51) Int. Cl.: H04W 12/06, H04L 9/40, H04W 24/02

(54) **COMMUNICATION METHOD AND NETWORK ELEMENT**
KOMMUNIKATIONSVERFAHREN UND NETZWERKELEMENT
PROCÉDÉ DE COMMUNICATION ET ÉLÉMENT DE RÉSEAU

(30) Priority: 09.07.2019 CN 201910615962
(43) Date of publication of application: 27.04.2022
(73) Proprietor: Huawei Technologies Co., Ltd., Longgang District Shenzhen, Guangdong 518129 (CN)
(72) Inventor: ZHU, Fangyuan, Shenzhen, Guangdong 518129 (CN); LI, Yan, Shenzhen, Guangdong 518129 (CN)
(74) Representative: Gill Jennings & Every LLP
(86) International application number: PCT/CN2020/100555
(87) International publication number: WO 2021/004444

(56) References cited:
- WO-A1-2018/013925
- CN-A- 108 347 729
- CN-A- 109 104 726
- CN-A- 109 842 880
- US-A1- 2017 359 768
- ERICSSON: "Correction of Network Slice selection with NSSF", vol. SA WG2, no. Sapporo, Japan; 20190624 - 20190628, 28 June 2019 (2019-06-28), XP051756464, Retrieved from the Internet <URL:http://www.3gpp.org/ftp/tsg_sa/WG2_Arch/TSGS2_134_Sapporo/Docs/S2-1907802.zip> [retrieved on 20190628]
- TELECOM ITALIA ET AL: "Slice Specific Authentication and Authorization with multiple registrations in the same PLMN", vol. SA WG2, no. Reno, Nevada, United States; 20190513 - 20190517, 29 May 2019 (2019-05-29), XP051748976, Retrieved from the Internet <URL:http://www.3gpp.org/ftp/Meetings%5F3GPP%5FSYNC/SA/Docs/SP%2D190421%2Ezip> [retrieved on 20190529]
- HUAWEI; HISILICON: "EAP based slice-specific authentication", 3GPP DRAFT; S3-192726-SLICE-SPECIFIC AUTHENTICATION, vol. SA WG3, 19 August 2019 (2019-08-19), Wroclaw (Poland), pages 1 - 3, XP051776562
- NOKIA; NOKIA SHANGHAI BELL; ERICSSON; HUAWEI; HISILICON; INTERDIGITAL: "Draft for network slice specific authentication procedures", 3GPP DRAFT; S3-194541, vol. SA WG3, 3 December 2019 (2019-12-03), Reno, US, pages 1 - 9, XP051835558
- HUAWEI; HISILICON: "EAP based slice-specific authentication procedure", 3GPP DRAFT; S3-193403-SLICE-SPECIFIC AUTHENTICATION, vol. SA WG3, 18 October 2019 (2019-10-18), Chongqing, China, pages 1 - 3, XP051796152
- HUAWEI; HISILICON: "Content in Slicing Clause X.X.2", 3GPP DRAFT; S3-194045, vol. SA WG3, 11 November 2019 (2019-11-11), Reno, US, pages 1 - 2, XP051824361
- HUAWEI; HISILICON; NOKIA; ERICSSON; INTERDIGITAL: "Content in Slicing Clause X.X.2", 3GPP DRAFT; S3-194536, vol. SA WG3, 22 November 2019 (2019-11-22), Reno, US, pages 1 - 3, XP051828680
- ANONYMOUS: "3rd Generation Partnership Project; Technical Specification Group Services and System Aspects; Security Aspects; Study on Security Aspects of Enhanced Network Slicing (Release 16)", 3GPP STANDARD; TECHNICAL REPORT; 3GPP TR 33.813, no. V0.4.0, 31 May 2019 (2019-05-31), pages 1 - 27, XP051753830
- ANONYMOUS: "3 Generation Partnership Project; Technical Specification Group Services and System Aspects; Security architecture and procedures for 5G system (Release 15)", 3GPP STANDARD; TECHNICAL SPECIFICATION; 3GPP TS 33.501, vol. SA WG3, no. V15.5.0, 13 June 2019 (2019-06-13), pages 1 - 190, XP051754085
- HUAWEI; HISILICON: "Conclusions to KI #1 on Slice Authentication", 3GPP DRAFT; S3-191929-CONCLUSION FOR KEY ISSUE 1-SLICE, vol. SA WG3, 17 June 2019 (2019-06-17), Sapporo (Japan), pages 1 - 1, XP051752877
- HUAWEI; HISILICON: "Conclusions to KI #1 on Slice Authentication", 3GPP DRAFT; S3-192366 CONCLUSIONS TO KI #1 ON SLICE AUTHENTICATION, vol. SA WG3, 28 June 2019 (2019-06-28), Sapporo (Japan), pages 1 - 1, XP051749874
- HUAWEI; HISILICON: "A solution to EAP method negotiation", 3GPP TSG-SA WG3 MEETING #95-BIS S3-192199, vol. SA WG3, 17 June 2019 (2019-06-17), Sapporo (Japan), pages 1 - 2, XP051753139

## Description

This application claims priority to Chinese Patent Application No. 201910615962.0, filed with the China National Intellectual Property Administration on July 9, 2019 and entitled "COMMUNICATION METHOD AND NETWORK ELEMENT".

### TECHNICAL FIELD

This application relates to the field of communication technologies, and in particular, to a communication method.

### BACKGROUND

A 5th generation mobile communication technology (5th Generation mobile communication technology, 5G) system architecture not only supports access to a core network side by using a radio technology defined by the 3GPP standard group, but also supports access to the core network side by using a non-3GPP access technology through a non-3GPP interworking function (non-3GPP interworking function, N3IWF), a next generation packet data gateway (next generation packet data gateway, ngPDG), a fixed network access gateway, or a trusted non-3GPP access gateway. In addition, hundreds of billions of internet of things devices access a network in the era of 5G, different types of application scenarios have different requirements on the network, and requirements of some of the scenarios may even conflict. If a single network is used to provide services for different types of application scenarios, a network architecture is extremely complex, and network management efficiency and resource utilization are low. In a 5G network slicing technology, independent logical networks are virtualized on a same network infrastructure, to provide network environments isolated from each other for different application scenarios, so that network functions and features can be customized for the different application scenarios based on respective requirements, and QoS requirements of different services can be effectively ensured.

When a terminal device accesses a same network slice through different public land mobile networks (public land mobile networks, PLMNs), in addition to performing a primary authentication procedure of a permanent identifier, the terminal device may further need to perform a network slice specific authentication and authorization procedure. Currently, in the different PLMNs, if the network slice specific authentication and authorization procedure needs to be performed on the same network slice that the terminal device requests to access, a core network element needs to repeatedly perform the network slice specific authentication and authorization procedure on the network slice. As a result, signaling between the terminal device and the core network side is wasted.
ERICSSON: "Correction of Network Slice selection with NSSF", 3GPP DRAFT; S2-907802_WAS07053_23501_NSSF, vol. SA WG2, no. Sapporo, Japan; 20190624 - 20190628 28 June 2019 (2019-06-28), discusses correction of network slice selection with NSSF. TELECOM ITALIA ET AL: "Slice Specific Authentication and Authorization with multiple registrations in the same PLMN", 3GPP DRAFT; 23502_CR1224R5_ENS_(REL-16)_S2-1906592_WAS_5306_MUL TIACCESS_ SSSA_23502, vol. SA WG2, no. Reno, Nevada, United States; 20190513 - 20190517 29 May 2019 (2019-05-29),

### SUMMARY

The present invention is defined by the appended claims. Embodiments and saspects not falling with te scope of the claims are considered useful information for understanding the invention. Embodiments of this application provide a communication method, to avoid a waste of signaling between a terminal device and a core network side caused because a network slice authentication procedure is repeatedly initiated on a same piece of S-NSSAI.

To achieve the foregoing objective, the embodiments of this application provide the following technical solutions.

A first aspect of this application provides a communication method. The communication method is applicable to an enhanced mobile broadband (enhanced mobile broadband, eMBB) scenario, a massive machine-type communications (massive machine-type communications, mMTC) scenario, and an ultra-reliable low-latency communication (Ultra-reliable low-latency communication, URLLC) scenario. The method may include: A first network element obtains a first authentication status of a target network slice of a first terminal device from a data management network element, where the first authentication status indicates a first authentication result of the target network slice, or the first authentication status indicates that no authentication procedure has been performed on the target network slice; and the first network element determines, based on the first authentication status, whether to perform a first authentication procedure on the target network slice. It can be learned from the first aspect that the first network element determines, based on the first authentication status, whether to perform the first authentication procedure on the target network slice, to avoid a waste of signaling between a terminal device and a core network side caused because a network slice authentication procedure is repeatedly initiated on a same piece of S-NSSAI.

Optionally, with reference to the first aspect, in a first possible implementation, that the first network element determines, based on the first authentication status, whether to perform a first authentication procedure on the target network slice may include: When the first network element determines the first authentication result of the target network slice based on the first authentication status, the first network element skips performing an authentication procedure on the target network slice; or when the first network element determines, based on the first authentication status, that no authentication procedure has been performed on the target network slice, the first network element performs the first authentication procedure on the target network slice. It can be learned from the first possible manner of the first aspect that the first network element no longer performs the first authentication procedure when determining, based on the first authentication status, that the first authentication result of the target network slice can be determined, to avoid the waste of signaling between the terminal device and the core network side caused because the network slice authentication procedure is repeatedly initiated on the same piece of S-NSSAI.

Optionally, with reference to the first possible implementation of the first aspect, in a second possible implementation, after the first network element performs the first authentication procedure on the target network slice based on the first authentication status, the method may further include: The first network element notifies the data management network element of a second authentication status of the target network slice, where the second authentication status indicates a second authentication result corresponding to the first authentication procedure. It can be learned from the second possible manner of the first aspect that, if the first network element performs the first authentication procedure on the target network slice, the first network element notifies the data management network element of an authentication result corresponding to the first authentication procedure; and when another network element needs to perform authentication on the target network slice, the another network element may directly obtain the authentication result, namely, the foregoing second authentication result, from the data management network element, to avoid repeatedly initiating the network slice authentication procedure on the same piece of S-NSSAI.

Optionally, with reference to the second possible implementation of the first aspect, in a third possible implementation, after the first network element performs the first authentication procedure on the target network slice based on the first authentication status, the method may further include: The first network element notifies the data management network element of validity time of the second authentication status of the target network slice. It can be learned from the third possible implementation of the first aspect that the authentication status may correspond to the validity time, so that validity of the authentication status can be flexibly controlled, thereby increasing diversity of solutions.

Optionally, with reference to the first aspect or the first to third possible implementations of the first aspect, in a fourth possible implementation, when the first network element is a mobility management network element, before the first network element obtains the first authentication status of the target network slice of the first terminal device from the data management network element, the method may further include: The first network element learns that the first terminal device requests to access the target network slice.

Optionally, with reference to the fourth possible implementation of the first aspect, in a fifth possible implementation, that the first network element determines, based on the first authentication status, not to perform the first authentication procedure on the target network slice may include: When the first network element determines, based on the first authentication status, that the first authentication result of the target network slice is a success, the first network element skips performing the first authentication procedure on the target network slice, and determines that the first terminal device is allowed to access the target network slice; or when the first network element determines, based on the first authentication status, that the first authentication result of the target network slice is a failure, the first network element skips performing the first authentication procedure on the target network slice, and determines that the first terminal device is not allowed to access the target network slice.

Optionally, with reference to the fourth or fifth possible implementation of the first aspect, in a sixth possible implementation, that a first network element obtains a first authentication status of a target network slice of a first terminal device from a data management network element may include: The first network element requests subscription data from the data management network element; and the first network element receives the subscription data and the first authentication status of the target network slice that are sent by the data management network element. It can be learned from the sixth possible implementation of the first aspect that, when the first network element is the mobility management network element, a specific manner in which the first network element obtains the first authentication status from the data management network element is provided.

Optionally, with reference to the fourth or fifth possible implementation of the first aspect, in a seventh possible implementation, that a first network element obtains a first authentication status of a target network slice of a first terminal device from a data management network element may include: The first network element sends a request message to the data management network element, where the request message is used to query the first authentication status of the target network slice; and the first network element receives a response message sent by the data management network element, where the response message indicates the first authentication status of the target network slice. It can be learned from the seventh possible implementation of the first aspect that, when the first network element is the mobility management network element, a specific manner in which the first network element obtains the first authentication status from the data management network element is provided.

Optionally, with reference to the first aspect or the first to third possible implementations of the first aspect, in an eighth possible implementation, when the first network element is an authentication server network element, before the authentication server network element obtains the first authentication status of the target network slice of the first terminal device from the data management network element, the method may further include: The authentication server network element receives a first message sent by a first mobility management network element, where the first message is used to request to perform the first authentication procedure.

Optionally, with reference to the eighth possible implementation of the first aspect, in a ninth possible implementation, that the first network element determines, based on the first authentication status, not to perform the first authentication procedure on the target network slice may include: When the first network element determines, based on the first authentication status, that the first authentication result of the target network slice is a success or a failure, the first network element determines not to perform the first authentication procedure on the target network slice, and sends the first authentication result of the target network slice to the first mobility management network element.

Optionally, with reference to the eighth or ninth possible implementation of the first aspect, in a tenth possible implementation, that a first network element obtains a first authentication status of a target network slice of a first terminal device from a data management network element may include: The first network element sends a request message to the data management network element, where the request message is used to query the first authentication status of the target network slice; and the first network element receives a response message sent by the data management network element, where the response message indicates the first authentication status of the target network slice. When the first network element is the authentication server network element, a specific manner in which the first network element obtains the first authentication status from the data management network element is provided.

Optionally, with reference to the eighth possible implementation of the first aspect, in an eleventh possible implementation, when the first network element performs the first authentication procedure on the target network slice, the authentication server network element receives a second message sent by a second mobility management network element, where the second message is used to request to perform a second authentication procedure on the target network slice of the first terminal device; the authentication server network element sends indication information to the second mobility management network element, where the indication information is used to indicate that the second authentication procedure is suspended; and after the authentication server network element learns of a second authentication result of the target network slice, the method may include: The authentication server network element sends the second authentication result of the target network slice to the second mobility management network element. It can be learned from the eleventh possible implementation of the first aspect that, the authentication server network element determines whether the second authentication procedure is on a same piece of S-NSSAI, and if the second authentication procedure is on the same piece of S-NSSAI, suspends one of network slice authentication procedures, that is, suspends the second authentication procedure. This can avoid the waste of signaling between the terminal device and the core network side caused because different mobility management network elements repeatedly initiate the network slice authentication procedure on the same piece of S-NSSAI.

A second aspect of this application provides a communication method. The method may include: A data management network element learns of a first authentication status of a target network slice of a first terminal device, where the first authentication status indicates a first authentication result of the target network slice, or the first authentication status indicates that no authentication procedure has been performed on the target network slice; and the data management network element sends the first authentication status to a first network element. It can be learned from the first aspect that the data management network element may send the learned authentication status of the target network slice to the first network element, and the first network element may determine, based on the first authentication status, whether to perform the first authentication procedure on the target network slice, to avoid a waste of signaling between a terminal device and a core network side caused because a network slice authentication procedure is repeatedly initiated on a same piece of S-NSSAI.

Optionally, with reference to the second aspect, in a first possible implementation, when the first authentication status indicates the first authentication result of the target network slice, that a data management network element learns of a first authentication status of a target network slice of a first terminal device may include: The data management network element receives a first authentication status sent by a second network element, where the second network element is a third mobility management network element that provides a service for the first terminal device when the first terminal device accesses the target network slice by using a first public land mobile network PLMN, and the first authentication status is a first authentication result corresponding to a third authentication procedure performed by the second network element on the target network slice of the first terminal device.

Optionally, with reference to the second aspect, in a second possible implementation, when the first authentication status indicates the first authentication result of the target network slice, that a data management network element learns of a first authentication status of a target network slice of a first terminal device may include: The data management network element receives a first authentication status sent by a third network element, where the first authentication status is a first authentication result corresponding to a third authentication procedure performed by the third network element on the target network slice, and the first network element and the third network element are authentication server network elements located in a home public land mobile network HPLMN.

Optionally, with reference to the second aspect or the first or second possible implementation of the second aspect, in a third possible implementation, the first network element is a first mobility management network element that provides a service for the first terminal device or an authentication server network element that provides a service for the first terminal device when the first terminal device accesses the target network slice by using a second public land mobile network PLMN, and the method may further include: The data management network element receives a request message sent by the first network element, where the request message is used to query the first authentication status of the target network slice; and that the data management network element sends the first authentication status to a first network element may include: The data management network element sends a response message to the first network element, where the response message indicates the first authentication status of the target network slice.

Optionally, with reference to the second aspect or the first or second possible implementation of the second aspect, in a fourth possible implementation, the first network element is a first mobility management network element that provides a service for the first terminal device when the first terminal device accesses the target network slice by using a second public land mobile network PLMN, and the method may further include: The data management network element receives a request message sent by the first network element, where the request message is used to request subscription data; and that the data management network element sends the first authentication status to a first network element may include: The data management network element sends the first authentication status of the target network slice and the subscription data to the first network element.

Optionally, with reference to the second aspect or the first to fourth possible implementations of the second aspect, in a fifth possible implementation, the method may further include: The data management network element receives validity time of the first authentication status of the target network slice.

A third aspect of this application provides a communication method. The method may include: A fourth network element receives a first authentication request message sent by a first network element, where the first authentication request message is used to request the fourth network element to perform a first authentication procedure on a first network slice accessed by a first terminal device; before the first authentication procedure ends, the fourth network element receives a second authentication request message sent by a second network element, where the second authentication request message is used to request the fourth network element to perform a second authentication procedure on the first network slice accessed by the first terminal device; the fourth network element sends indication information to the second network element, where the indication information is used to indicate that the second authentication procedure is suspended; and
the fourth network element obtains a first authentication result of the first authentication procedure, and sending the first authentication result of the first authentication procedure to the second network element. The fourth network element determines whether the second authentication procedure is on a same piece of S-NSSAI, and if the second authentication procedure is on the same piece of S-NSSAI, suspends one of network slice authentication procedures, that is, suspends the second authentication procedure. This can avoid a waste of signaling between a terminal device and a core network side caused because a network slice authentication procedure is repeatedly initiated on a same piece of S-NSSAI.

Optionally, with reference to the third aspect, in a first possible implementation, the fourth network element is an authentication server network element, the first network element is a first mobility management network element located in a first PLMN, and the second network element is a second mobility management network element located in a second PLMN.

Optionally, with reference to the third aspect, in a second possible implementation, the fourth network element is an authentication, authorization, and accounting server, and the first network element and the second network element are authentication server network elements located in an HPLMN.

A fourth aspect of this application provides a first network element. The first network element may include: a transceiver unit, configured to obtain a first authentication status of a target network slice of a first terminal device from a data management network element, where the first authentication status indicates a first authentication result of the target network slice, or the first authentication status indicates that no authentication procedure has been performed on the target network slice; and a processing unit, where the processing unit is coupled to the transceiver unit, and is configured to determine, based on the first authentication status obtained by the transceiver unit, whether to perform a first authentication procedure on the target network slice.

Optionally, with reference to the fourth aspect, in a first possible implementation, the processing unit is specifically configured to: when determining the first authentication result of the target network slice based on the first authentication status obtained by the transceiver unit, skip performing an authentication procedure on the target network slice; or when determining, based on the first authentication status obtained by the transceiver unit, that no authentication procedure has been performed on the target network slice, perform, by the first network element, the first authentication procedure on the target network slice.

Optionally, with reference to the first possible implementation of the fourth aspect, in a second possible implementation, the transceiver unit is further configured to notify the data management network element of a second authentication status of the target network slice, where the second authentication status indicates a second authentication result corresponding to the first authentication procedure.

Optionally, with reference to the second possible implementation of the fourth aspect, in a third possible implementation, the transceiver unit is further configured to notify the data management network element of validity time of the second authentication status of the target network slice.

Optionally, with reference to the fourth aspect or the first to third possible implementations of the fourth aspect, in a fourth possible implementation, when the first network element is a mobility management network element, before obtaining the first authentication status of the target network slice of the first terminal device from the data management network element, the transceiver unit is further configured to learn that the first terminal device requests to access the target network slice.

Optionally, with reference to the fourth possible implementation of the fourth aspect, in a fifth possible implementation, the processing unit is specifically configured to: when determining, based on the first authentication status obtained by the transceiver unit, that the first authentication result of the target network slice is a success, skip performing the first authentication procedure on the target network slice, and determine that the first terminal device is allowed to access the target network slice; or when determining, based on the first authentication status obtained by the transceiver unit, that the first authentication result of the target network slice is a failure, skip performing the first authentication procedure on the target network slice, and determine that the first terminal device is not allowed to access the target network slice.

Optionally, with reference to the fourth or fifth possible implementation of the fourth aspect, in a sixth possible implementation, the transceiver unit is specifically configured to: learn of a registration request of the first terminal device; request, based on the registration request, the data management network element to send subscription data; and receive the subscription data and the first authentication status of the target network slice that are sent by the data management network element.

Optionally, with reference to the fourth or fifth possible implementation of the fourth aspect, in a seventh possible implementation, the transceiver unit is specifically configured to: request subscription data from the data management network element, and receive a response message sent by the data management network element, where the response message indicates the first authentication status of the target network slice.

Optionally, with reference to the fourth aspect or the first to third possible implementations of the fourth aspect, in an eighth possible implementation, when the first network element is an authentication server network element, before obtaining the first authentication status of the target network slice of the first terminal device from the data management network element, the transceiver unit is further configured to receive a first message sent by a first mobility management network element, where the first message is used to request to perform the first authentication procedure.

Optionally, with reference to the eighth possible implementation of the fourth aspect, in a ninth possible implementation, the processing unit is specifically configured to: when determining, based on the first authentication status, that the first authentication result of the target network slice is a success or a failure, determine not to perform the first authentication procedure on the target network slice, and send the first authentication result of the target network slice to the first mobility management network element.

Optionally, with reference to the eighth or ninth possible implementation of the fourth aspect, in a tenth possible implementation, the transceiver unit is specifically configured to: send a request message to the data management network element, where the request message is used to query the first authentication status of the target network slice; and receive a response message sent by the data management network element, where the response message indicates the first authentication status of the target network slice.

Optionally, with reference to the eighth possible implementation of the fourth aspect, in an eleventh possible implementation, the transceiver unit is further configured to: when the processing unit performs the first authentication procedure on the target network slice, receive a second message sent by a second mobility management network element, where the second message is used to request to perform a second authentication procedure on the target network slice of the first terminal device; the transceiver unit is further configured to send indication information to the second mobility management network element, where the indication information is used to indicate that the second authentication procedure is suspended; and the transceiver unit is further configured to: after learning of a second authentication result of the target network slice, send the second authentication result of the target network slice to the second mobility management network element.

A fifth aspect of this application provides a data management network element. The data management network element may include a transceiver unit, configured to learn of a first authentication status of a target network slice of a first terminal device, where the first authentication status indicates a first authentication result of the target network slice, or the first authentication status indicates that no authentication procedure has been performed on the target network slice, where the transceiver unit is further configured to send the first authentication status to a first network element.

Optionally, with reference to the fifth aspect, in a first possible implementation, the transceiver unit is specifically configured to receive a first authentication status sent by a second network element, where the second network element is a third mobility management network element that provides a service for the first terminal device when the first terminal device accesses the target network slice by using a first public land mobile network PLMN, and the first authentication status is a first authentication result corresponding to a third authentication procedure performed by the third network element on the target network slice.

Optionally, with reference to the fifth aspect, in a second possible implementation, the transceiver unit is specifically configured to receive a first authentication status sent by a third network element, where the third network element is an authentication server network element that provides a service for the first terminal device when the first terminal device accesses the target network slice by using a first public land mobile network PLMN, the first authentication status is a first authentication result corresponding to a third authentication procedure performed by the third network element on the target network slice, and the first network element and the third network element are authentication server network elements located in a home public land mobile network HPLMN.

Optionally, with reference to the fifth aspect or the first or second possible implementation of the fifth aspect, in a third possible implementation, the first network element is a first mobility management network element that provides a service for the first terminal device or an authentication server network element that provides a service for the first terminal device when the first terminal device accesses the target network slice by using a second public land mobile network PLMN, and the transceiver unit is further configured to receive a request message sent by the first network element, where the request message is used to query the first authentication status of the target network slice; and the transceiver unit is specifically configured to send a response message to the first network element, where the response message indicates the first authentication status of the target network slice.

Optionally, with reference to the fifth aspect or the first or second possible implementation of the fifth aspect, in a fourth possible implementation, the first network element is a first mobility management network element that provides a service for the first terminal device when the first terminal device accesses the target network slice by using a second public land mobile network PLMN, and the transceiver unit is further configured to receive a request message sent by the first network element, where the request message is used to request subscription data; and the transceiver unit is specifically configured to send the first authentication status of the target network slice and the subscription data to the first network element.

Optionally, with reference to the fifth aspect or the first to fourth possible implementations of the fifth aspect, in a fifth possible implementation, the transceiver unit is further configured to receive validity time of the first authentication status of the target network slice.

A sixth aspect of this application provides a fourth network element. The fourth network element may include: a transceiver unit, configured to receive a first authentication request message sent by a first network element, where the first authentication request message is used to request a third network element to perform a first authentication procedure on a first network slice accessed by a first terminal device, where before the first authentication procedure ends, the transceiver unit is further configured to receive a second authentication request message sent by a second network element, where the second authentication request message is used to request the third network element to perform a second authentication procedure on the first network slice accessed by the first terminal device; the transceiver unit is further configured to send indication information to the second network element, where the indication information is used to indicate that the second authentication procedure is suspended; and the transceiver unit is further configured to: obtain a first authentication result of the first authentication procedure, and send the first authentication result of the first authentication procedure to the second network element.

Optionally, with reference to the sixth aspect, in a first possible implementation, the fourth network element is an authentication server network element, the first network element is a first mobility management network element located in a first PLMN, and the second network element is a second mobility management network element located in a second PLMN.

Optionally, with reference to the sixth aspect, in a second possible implementation, the fourth network element is an authentication, authorization, and accounting server, and the first network element and the second network element are authentication server network elements located in an HPLMN.

A seventh aspect of this application provides a computer-readable storage medium. The computer-readable storage medium stores instructions. When the instructions are run on a computer, the computer is enabled to perform the communication method according to any one of the first aspect or the possible implementations of the first aspect.

An eighth aspect of this application provides a computer-readable storage medium. The computer-readable storage medium stores instructions. When the instructions are run on a computer, the computer is enabled to perform the communication method according to any one of the second aspect or the possible implementations of the second aspect.

A ninth aspect of this application provides a computer-readable storage medium. The computer-readable storage medium stores instructions. When the instructions are run on a computer, the computer is enabled to perform the communication method according to any one of the third aspect or the possible implementations of the third aspect.

A tenth aspect of this application provides a computer program product including instructions. When the computer program product runs on a computer, the computer is enabled to perform the communication method according to any one of the first aspect or the possible implementations of the first aspect.

An eleventh aspect of this application provides a computer program product including instructions. When the computer program product runs on a computer, the computer is enabled to perform the communication method according to any one of the second aspect or the possible implementations of the second aspect.

A twelfth aspect of this application provides a computer program product including instructions. When the computer program product runs on a computer, the computer is enabled to perform the communication method according to any one of the third aspect or the possible implementations of the third aspect.

For technical effects brought by any implementation of the fourth aspect, the seventh aspect, the tenth aspect, and the ninth aspect, refer to technical effects brought by different implementations of the first aspect. Details are not described herein again.

For technical effects brought by any implementation of the fifth aspect, the eighth aspect, the eleventh aspect, and the tenth aspect, refer to technical effects brought by different implementations of the second aspect. Details are not described herein again.

For technical effects brought by any implementation of the sixth aspect, the ninth aspect, and the twelfth aspect, refer to technical effects brought by different implementations of the third aspect. Details are not described herein again.

A thirteenth aspect of this application provides a system. The system includes a first network element and a data management network element, where the first network element is the first network element described in any one of the first aspect or the possible implementations of the first aspect, and the data management network element is the data management network element described in any one of the second aspect or the possible implementations of the second aspect.

A fourteenth aspect of this application provides a system. The system may include a fourth network element, a first network element, and a data management network element, where the first network element is the first network element described in any one of the first aspect or the possible implementations of the first aspect, the data management network element is the data management network element described in any one of the second aspect or the possible implementations of the second aspect, and the fourth network element is the fourth network element described in any one of the third aspect or the possible implementations of the third aspect.

A fifteenth aspect of this application provides a system. The system may include a first network element and a fourth network element, where the first network element is the first network element described in any one of the first aspect or the possible implementations of the first aspect, and the fourth network element is the fourth network element described in any one of the third aspect or the possible implementations of the third aspect.

According to the technical solutions provided in this application, the first network element determines, based on the first authentication status, whether to perform the first authentication procedure on the target network slice, to avoid the waste of signaling between the terminal device and the core network side caused because the network slice authentication procedure is repeatedly initiated on the same piece of S-NSSAI.

### BRIEF DESCRIPTION OF DRAWINGS

FIG. 1 is a schematic diagram of a system architecture according to an embodiment of this application;
FIG. 2 is a schematic diagram of performing repeated authentication on a same piece of S-NSSAI in different PLMN scenarios;
FIG. 3 is a schematic flowchart of a communication method 300 according to this application;
FIG. 4 is a schematic flowchart of a communication method 400 according to this application;
FIG. 5Aand FIG. 5B are a schematic flowchart of a communication method 500 according to this application;
FIG. 6 is a schematic diagram of a scenario according to this application;
FIG. 7 is a schematic flowchart of a communication method 700 according to this application;
FIG. 8 is a schematic flowchart of a communication method 800 according to this application;
FIG. 9 is a schematic diagram of another scenario according to this application;
FIG. 10 is a schematic diagram of a hardware structure of a communication device according to an embodiment of this application;
FIG. 11 is a schematic diagram of a structure of a first network element according to an embodiment of this application;
FIG. 12 is a schematic diagram of a structure of an AMF network element according to an embodiment of this application;
FIG. 13 is a schematic diagram of a structure of a UDM network element according to an embodiment of this application;
FIG. 14 is a schematic diagram of a structure of an AUSF network element according to an embodiment of this application; and
FIG. 15 is a schematic diagram of a structure of an AAA-S according to an embodiment of this application.

### DESCRIPTION OF EMBODIMENTS

The following describes embodiments of this application with reference to accompanying drawings. It is clear that the described embodiments are merely some rather than all of the embodiments of this application. A person of ordinary skill in the art may learn that, with technology development and emergence of a new scenario, the technical solutions provided in the embodiments of this application are also applicable to a similar technical problem.

The embodiments of this application provide a communication method, a network element, and a storage medium. When a first terminal device accesses a target network slice by using a first public land mobile network (public land mobile network, PLMN), when a first network element can determine an authentication result of the target network slice based on an authentication status sent by a user data management function (User Data Management, UDM), the first network element no longer performs repeated authentication on the target network slice, and the authentication result is a result of authentication performed by a second network element on the target network slice when the first terminal device accesses the target network slice by using a second PLMN. When the first network element determines, based on the authentication status sent by a UDM network element, that no authentication procedure has been performed on the target network slice, the first network element notifies the UDM network element of the authentication status of the target network slice after performing authentication on the target network slice. This avoids a waste of signaling between a terminal device and a core network side caused because different core network elements repeatedly initiate a network slice authentication procedure on a same target network slice. Details are separately described below.

In the specification, claims, and accompanying drawings of this application, the terms "first", "second", and the like are intended to distinguish between similar objects but do not necessarily indicate a specific order or sequence. It should be understood that data termed in such a way is interchangeable in proper circumstances, so that the embodiments described herein can be implemented in other orders than the order illustrated or described herein. In addition, terms "include" and "have" and any other variants thereof are intended to cover the non-exclusive inclusion, for example, a process, method, system, product, or device including a list of steps or modules is not necessarily limited to those clearly listed steps or modules, but may include other steps or modules that are not clearly listed or are inherent to such a process, method, product, or device. Naming or numbering of steps in this application does not mean that steps in the method procedure need to be performed according to a time/logical order indicated by the naming or numbering. An execution order of process steps that have been named or numbered may be changed according to a technical objective to be implemented, provided that a same or similar technical effect can be achieved. Division into the modules in this application is logical division. During actual application, there may be another division manner. For example, a plurality of modules may be combined or integrated into another system, or some features may be ignored or not performed. In addition, the displayed or discussed mutual couplings or direct couplings or communication connections may be implemented through some ports, and the indirect couplings or communication connections between the modules may be implemented in an electrical form or another similar form. This is not limited in this application. In addition, modules or sub-modules described as separate components may be or may not be physically separated, or may be or may not be physical modules, or may be distributed into a plurality of circuit modules. Objectives of the solutions of this application may be achieved by selecting some or all of the modules based on an actual requirement.

It should be noted that in the embodiments of this application, terms "network" and "system" are usually interchangeably used, but meanings of the terms may be understood by a person skilled in the art. Terms "information (information)", "signal (signal)", and "message (message)", may be interchangeably used sometimes. It should be noted that meanings expressed by the terms are consistent when differences of the terms are not emphasized.

It should be further noted that, in the embodiments of this application, terms "reporting", "feedback", and "response" are usually interchangeably used, but meanings of the terms may be understood by a person skilled in the art. Therefore, in the embodiments of this application, meanings expressed by the terms are consistent when differences of the terms are not emphasized.

For ease of understanding this application, before the method in this application is described, a network architecture, a network slice, and authentication to which the embodiments of this application are applicable are first described.

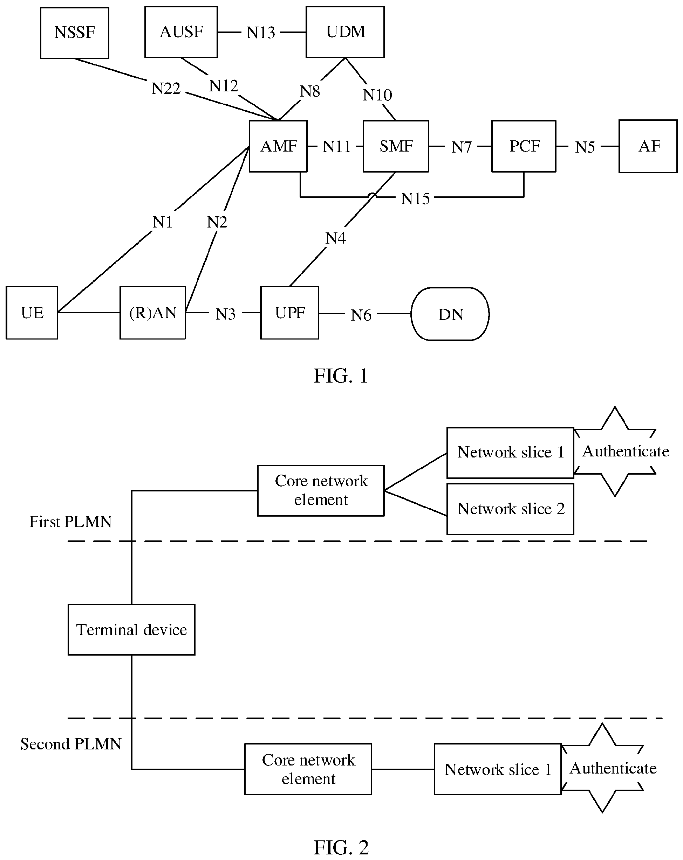

FIG. 1 is a schematic diagram of a system architecture according to an embodiment of this application.

For example, FIG. 1 is a schematic diagram of a system architecture according to this application. As shown in FIG. 1, the system architecture includes a mobility management network element, a session management network element, a policy control network element, an authentication service network element, a data management network element, and a user plane network element. Further, the communication system architecture further includes an access network device, a terminal device (user equipment, UE), and a data network (data network, DN) element. The terminal device may be connected to the mobility management network element. The access network device may also be connected to the mobility management network element. The access network device may further be connected to the user plane network element. The user plane network element may be connected to each of the session management network element and a data network. The mobility management network element may be connected to each of the session management network element, the data management network element, the policy control network element, and the authentication service network element. The session management network element is connected to each of the policy control network element and the data management network element. The mobility management network element and the session management network element each may obtain data, for example, user subscription data, from the data management network element, and may obtain policy data from the policy control network element. For example, the policy control network element obtains the user subscription data from the data management network element and sends the user subscription data to the mobility management network element and the session management network element. Then, the mobility management network element and the session management network element deliver the user subscription data to the access network device, the terminal device, the user plane network element, and the like.

The mobility management network element is mainly used for registration, mobility management, and a tracking area update procedure for a terminal device in a mobile network. The mobility management network element terminates a non-access stratum (non-access stratum, NAS) message, completes registration management, connection management, and reachability management, tracking area list (tracking area list, TAlist) allocation, mobility management, and the like, and transparently routes a session management (session management, SM) message to the session management network element. In 4th generation (4th generation, 4G) communication, the mobility management network element may be a mobility management entity (Mobility Management Entity, MME). In 5th generation (5th generation, 5G) communication, the mobility management network element may be a core network access and mobility management function (access and mobility management function, AMF) network element. In future communication, for example, in 6th generation (6th generation, 6G) communication, the mobility management network element may still be an AMF network element, or a network element with another name that supports a mobility management function. This is not limited in this application.

The session management network element is mainly used for session management in a mobile network, for example, session creation, modification, and release. Specific functions include, for example, allocating an internet protocol (internet protocol, IP) address to a user, or selecting a user plane network element that provides a packet forwarding function. In 4G, the session management network element may be a packet data network gateway (Packet Data Network Gateway, PGW) control plane function (control plane of PGW). In 5G, the session management network element may be a session management function (session management function, SMF) network element. In future communication, for example, in 6G, the session management network element may still be an SMF network element, or a network element with another name that supports a session management function. This is not limited in this application.

The policy control network element has a user subscription data management function, a policy control function, a charging policy control function, quality of service (quality of service, QoS) control, and the like. In 4G, the policy control network element may be a policy and charging rules function (policy and charging rules function, PCRF). In 5G, the policy control network element may be a policy control function (policy control function, PCF) network element. In future communication, for example, in 6G, the policy control network element may still be a PCF network element, or a network element with another name that supports a policy control function. This is not limited in this application.

The authentication server network element is mainly configured to use an extensible authentication protocol (extensible authentication protocol, EAP) to verify a service function and store a key, to implement authentication and authorization on a user. In 4G, an authentication server may be an authentication, authorization, and accounting server (authentication, authorization, and accounting server, AAA Server). In 5G, the authentication server network element may be an authentication server function (authentication server function, AUSF) network element. In future communication, for example, in 6G, the authentication server network element may still be an AUSF network element, or a network element with another name that supports an authentication function. This is not limited in this application.

The data management network element is mainly configured to store user data, such as subscription information and authentication/authorization information. In 4G, the data management network element may be a home subscriber server (Home subscriber Server, HSS). In 5G, the data management network element may be a unified data management (unified data management, UDM) network element. In future communication, for example, in 6G, the data management network element may still be a UDM network element, or a network element with another name that supports a data management function. This is not limited in this application.

The user plane network element is mainly used for user-plane service processing, for example, service routing, packet forwarding, an anchoring function, quality of service (quality of service, QoS) mapping and execution, identification of an uplink identifier and routing the identifier to the data network, downlink packet buffering, triggering notification of downlink data arrival, and connection to an external data network. In 4G, the user plane network element may be a (Packet Data Network Gateway, PGW) packet data network gateway user plane function (user plane of PGW). In 5G, the user plane network element may be a user plane function (user plane function, UPF) network element. In future communication, for example, in 6G, the user plane network element may still be a UPF network element, or a network element with another name that supports a user plane function. This is not limited in this application.

The access network device may also be referred to as a radio access network (radio access network, RAN) device, and is a device that provides a wireless communication function for a terminal device. The access network device includes but is not limited to: a next generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a mobile switching center, and the like.

The terminal device (user equipment, UE) is a device having a wireless transceiver function. The terminal device may be deployed on land, including an indoor device, an outdoor device, a handheld device, or a vehicle-mounted device; may be deployed on a water surface (for example, on a ship); may be deployed in the air (for example, on a plane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like.

The data network (Data Network, DN) is mainly used to provide a service for the user, for example, a service of an operator, an Internet access service, or a third-party service.

As a bearer network, a core network (core network, CN) provides an interface to the DN, and provides a communication connection, authentication, management, communication, data service bearer completion, and the like for the terminal device. In the network architecture shown in FIG. 1, core network functions are classified into user plane functions and control plane functions. The user plane function is mainly responsible for packet data packet forwarding, QoS control, and the like. The control plane function is mainly responsible for user registration and authentication, mobility management, delivering a data packet forwarding policy or a QoS control policy to a user plane function (user plane function, UPF), and the like. The control plane function mainly includes an access and mobility management function (access and mobility management function, AMF) network element, a session management function (session management function, SMF) network element, and the like. Specifically, the AMF network element is responsible for a registration procedure during user access, location management in a user movement process, paging a terminal device, and the like. The SMF network element is responsible for establishing a corresponding session connection on the core network side when a user initiates a service, providing a specific service for the user, and the like.

It may be understood that the network elements or the functions may be network elements in a hardware device, software functions running on dedicated hardware, or virtualized functions instantiated on a platform (for example, a cloud platform). One or more services may be obtained through division based on the network elements or the functions. Further, services that exist independently of network functions may occur. In this application, instances of the functions, instances of services included in the functions, or instances of services that exist independently of network functions may be referred to as service instances.

For example, this application is described by using a 5G communication system architecture. As shown in FIG. 1, interfaces and connections in the system architecture may include N1, N2, N3, N4, N5, N6, N7, N8, N10, N11, N12, N15, and N22. N1 is a control plane connection between the terminal device and the AMF network element, and is configured to transmit control signaling between user equipment and a core network control plane. Specifically, a message in the N1 connection may be transmitted through a connection between the terminal device and the RAN or an N2 connection between the RAN and the AMF network element. N2 is a control plane connection between the RAN and the AMF network element. N3 is a connection between the RAN and the user plane function. N4 is a connection between the SMF network element and the user plane function, and is used to transfer control signaling between the SMF network element and the user plane function. N5 is a connection between the PCF and the AF, N6 is a connection between the user plane function and the DN, N7 is a connection between the SMF network element and the PCF, N8 is a connection between the AMF network element and the UDM network element, N10 is a connection between the UDM network element and the SMF network element, N11 is a connection between the AMF network element and the SMF network element, N12 is a connection between the AUSF network element and the AMF network element, N15 is a connection between the AMF network element and the PCF network element, and N22 is a connection between the NSSF network element and the AMF network element.

In the era of 5G, a large quantity of devices will be connected to a network, and these devices belong to different fields and have different characteristics and requirements. Different devices have different requirements on mobility, security, a latency, reliability, and even a charging mode of the network. Current 5G application scenarios include enhanced mobile broadband (enhanced mobile broadband, eMBB), massive machine-type communications (massive machine-type communications, mMTC), and ultra-reliable low-latency communication (Ultra-reliable low-latency communication, URLLC).

The eMBB scenario is mainly intended for applications such as 4K/8K ultra-high-definition video, holography, and augmented reality/virtual reality. A primary requirement of mobile broadband is a larger data capacity. A peak rate for a smart terminal user to surf the Internet needs to reach 10 Gbit/s or even 20 Gbit/s, to enable high-bandwidth applications such as virtual reality, ubiquitous live video and video sharing, and cloud access anywhere anytime.

The mMTC scenario is applied to massive sensors that are deployed in fields such as measurement, architecture, agriculture, logistics, smart city, and home. These sensor devices are deployed extremely densely, mostly static. This requires that a 5G network support massive connections, up to one million connections per square kilometer to humans and things.

The URLLC scenario is mainly used in fields such as self-driving, automatic factory, and smart grids, and mainly requires a low latency and high reliability. A latency of a 5G network is required to be 1 millisecond, to enable vertical industry applications, for example, low-latency services such as smart manufacturing, remote machine control, assisted driving, and automatic driving.

Different devices have different network requirements. Therefore, a concept of network slicing is introduced into the 5G network architecture. With network slicing, a physical network is sliced into a plurality of virtual end-to-end networks. These virtual networks, including devices, and access, transport, and core networks in the networks, are logically independent, and a fault occurring on any one virtual network does not affect any other virtual network. The virtual networks each have different function characteristics and are intended for different requirements and services.

When the terminal device needs to access a network slice, the terminal device may provide requested network slice selection assistance information (requested network slice selection assistance information, requested NSSAI) to the core network, so that the core network selects an AMF network element and a network slice instance for the terminal device. Single network slice selection assistance information (single network slice selection assistance information, S-NSSAI) is used to identify one network slice. After the terminal device attaches to the network, in the network performs, comprehensive determining is performed based on subscription data of the terminal device, and information such as a roaming agreement and a local configuration, and current allowed network slice selection assistance information (Allowed network slice selection assistance information, Allowed NSSAI) of the current network is returned. The value is sent to the terminal device together with a registration accept message, and is sent to the core network when the terminal device subsequently initiates a service request. After the terminal device attaches to the network, if the core network determines that the allowed NSSAI of the terminal device needs to be updated, the allowed NSSAI locally stored by the terminal device may be updated in a network-triggered configuration update procedure.

When the terminal device registers with the network, in addition to performing a primary authentication procedure of a permanent identifier of the terminal device, the core network may further determine, based on the requested NSSAI of the terminal device and the subscription data of the terminal device, whether a network slice specific authentication and authorization procedure (network slice specific authentication and authorization procedure) needs to be performed on a piece of S-NSSAI in the requested NSSAI. The procedure may also be referred to as a secondary authentication procedure of a network slice for short, or referred to as a second authentication procedure for short.

According to an existing 3GPP protocol, when the terminal device carries first requested NSSAI and registers with a first PLMN by using a first access technology (for example, a 3GPP access type), a first AMF network element in the first PLMN serves the terminal device, and sends allowed NSSAI (Allowed NSSAI for 3GPP access type) applicable to the 3GPP access technology to the terminal device. "Allowed NSSAI for 3GPP access type" indicates that each piece of S-NSSAI in the allowed NSSAI of the terminal device can be used only in the 3GPP access type.

If the terminal device finds that another PLMN exists in the current location, to distinguish from the first PLMN, the another PLMN is referred to as a second PLMN herein, the terminal device carries second requested NSSAI and initiates a registration procedure by using a second access technology (for example, a non-3GPP access type), and a second AMF network element in the second PLMN serves the terminal device, and sends allowed NSSAI (Allowed NSSAI for non-3GPP access type) applicable to the non-3GPP access technology to the terminal device. "Allowed NSSAI for non-3 GPP access type" indicates that each piece of S-NSSAI in the allowed NSSAI of the terminal device can be used only in the non-3GPP access type.

If "Allowed NSSAI for 3GPP access type" and "Allowed NSSAI for non-3GPP access type" contain a same piece of S-NSSAI, it indicates that the S-NSSAI can be used in the 3GPP access type and the non-3GPP access type.

FIG. 2 is a schematic diagram of performing repeated authentication on a same piece of S-NSSAI to which a same terminal device requests to access in different PLMN scenarios. In the scenario shown in FIG. 2, the terminal device accesses core networks of different PLMNs by using different access technologies. For example, one may be a core network side, of a first PLMN, accessed by using a radio technology defined in a 3GPP standard group, and another may be a core network side, of a second PLMN, that is accessed through an N3IWF by using a non-3GPP access technology. When the terminal device sequentially registers with the first PLMN and the second PLMN by using different access technologies, and requested NSSAI carried in a registration request includes same S-NSSAI on which authentication needs to be performed, for example, a network slice 1 shown in FIG. 2. When a network slice specific authentication and authorization procedure has been performed on the S-NSSAI used to identify the network slice 1 in the first PLMN, and if repeat authentication is performed on the S-NSSAI in the second PLMN, because the authentication procedure of the network slice is irrelevant to an access technology, repeat authentication is performed on the same piece of S-NSSAI. In other words, repeat authentication is performed on the network slice 1 in the scenario shown in FIG. 2, and signaling is wasted.

To resolve this problem, this application provides a communication method, to resolve a waste of signaling caused because authentication is repeatedly performed on a same piece of S-NSSAI.

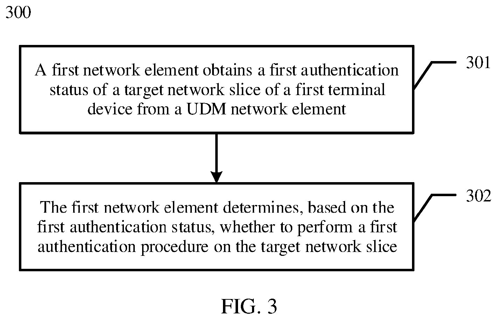

FIG. 3 is a schematic flowchart of a communication method 300 according to this application.

As shown in FIG. 3, the communication method 300 provided in this application may include the following steps.

301: A first network element obtains a first authentication status of a target network slice of a first terminal device from a UDM network element.

When the first terminal device accesses the target network slice by using a first PLMN, the first network element obtains the first authentication status of the target network slice of the first terminal device from the UDM network element. Specifically, the first authentication status indicates a first authentication result of the target network slice, or the first authentication status indicates that no authentication procedure has been performed on the target network slice. The first authentication result may include that the authentication procedure has been performed on the target network slice and the authentication result is a success, or the authentication procedure has been performed on the target network slice and the authentication result is a failure.

302: The first network element determines, based on the first authentication status, whether to perform a first authentication procedure on the target network slice.

In a specific implementation, when the first network element determines the first authentication result of the target network slice based on the first authentication status, the first network element does not perform the first authentication procedure on the target network slice. For example, when the first network element determines, based on the first authentication status, that the first authentication result of the target network slice is a success or a failure, the first network element does not perform the first authentication procedure on the target network slice in the first PLMN. The first authentication result is a result of authentication performed by a second network element on the target network slice when the first terminal device accesses the target network slice by using a second PLMN.

In a specific implementation, when the first network element determines, based on the first authentication status, that no authentication procedure has been performed on the target network slice, the first network element performs the first authentication procedure on the target network slice.

In a specific implementation, after performing the first authentication procedure on the target network slice based on the first authentication status, the first network element notifies the UDM network element of a second authentication status of the target network slice, where the second authentication status indicates a second authentication result corresponding to the first authentication procedure. For example, the first terminal device accesses the target network slice by using the first PLMN, and it is assumed that the target network slice includes a first target network slice and a second target network slice, and the first network element determines, based on the first authentication status of the target network slice of the first terminal device obtained from the UDM network element, that an authentication result of the first target network slice is a success or a failure, and determines that no authentication procedure has been performed on the second target network slice. In this case, the first network element does not perform the authentication procedure on the first target network slice. The authentication result of the first target network slice is a result of authentication performed by the second network element on the target network slice when the first terminal device accesses the target network slice by using the second PLMN. After performing an authentication procedure on the second target network slice in the first PLMN, the first network element notifies the UDM network element of a second authentication status of the second target network slice. When the first terminal device accesses the second target network slice by using the second PLMN, and the second network element needs to perform the authentication procedure on the second target network slice, the second network element may obtain the second authentication status of the second target network slice of the first terminal device from the UDM network element. The second authentication status indicates an authentication result of the second target network slice. If the authentication result is a result of authentication performed by the first network element on the second target network slice, the second network element may determine not to perform the authentication procedure on the second network slice.

It can be learned from the method 300 that the first network element determines, based on the first authentication status, whether to perform the first authentication procedure on the target network slice, to avoid a waste of signaling between a terminal device and a core network side caused because a network slice authentication procedure is repeatedly initiated on a same piece of S-NSSAI.

The first network element may be a different network element in a different solution. For example, the first network element may be an AMF network element or an AUSF network element. In addition, the first network element may obtain the first authentication status of the target network slice of the first terminal device from the UDM network element in a plurality of manners. For example, the UDM network element may send an authentication status of the target network slice to the first network element by using a response message based on a request message sent by the first network element. Alternatively, when the first network element is the AMF network element, the UDM network element may include the authentication status of the target network slice in a subscribed S-NSSAI message of the terminal device that is sent to the AMF network element. In addition, after performing authentication procedures on a plurality of target network slices, the first network element may send authentication results of all the target network slices to the UDM network element at a time, or may send the authentication results of the target network slices to the UDM network element in a plurality of times. The following separately describes the foregoing solutions in detail.

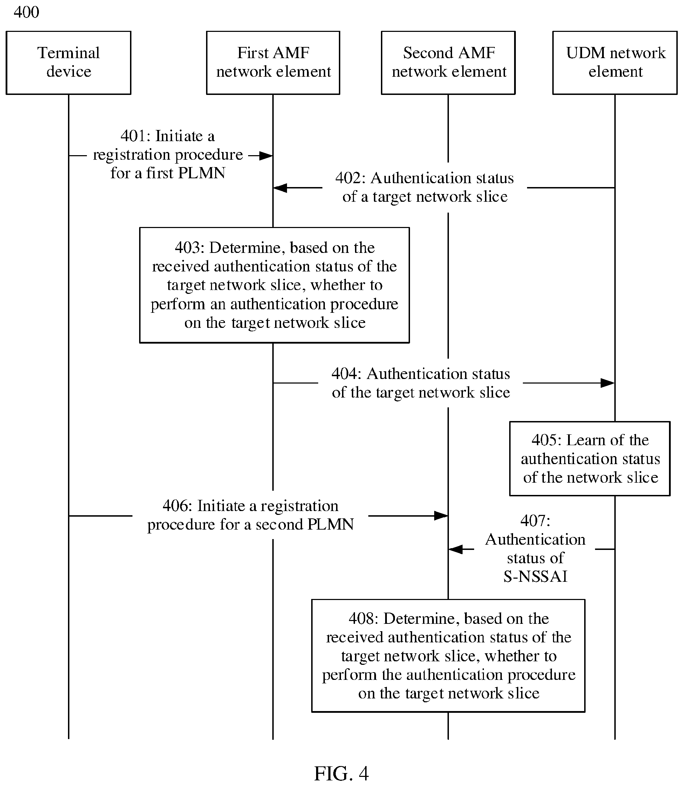

FIG. 4 is a schematic flowchart of a communication method 400 according to this application.

As shown in FIG. 4, the communication method 400 provided in this application may include the following steps.

401: A terminal device initiates a registration procedure for a first PLMN by using a first access technology.

When the terminal device initiates the registration procedure, requested NSSAI is carried. An access device selects, for the terminal based on the NSSAI, an AMF network element corresponding to an appropriate network slice, and then forwards a registration request to the AMF network element, and the AMF entity receives and processes the registration request. The access device corresponding to the first access technology is omitted in FIG. 4. A first AMF network element provides a service for the terminal device.

402: A UDM network element sends an authentication status of a target network slice to the first AMF network element.

In a specific implementation, the first AMF network element may request the UDM network element to send subscribed S-NSSAI of the terminal device, and the UDM network element sends the subscribed S-NSSAI of the terminal device to the first AMF network element based on a request of the first AMF network element, and sends the authentication status of the target network slice to the AMF network element. For example, the first AMF network element may invoke a service-oriented operation Nudm_SDM_Get of the UDM to obtain the subscribed S-NSSAI of the terminal device. The UDM network element sends, to the first AMF network element by using an Nudm_SDM_Get response, the subscribed S-NSSAI of the terminal device and indication information indicating whether authentication needs to be performed on each piece of subscribed S-NSSAI. The UDM may further send, to the first AMF network element by using the Nudm_SDM_Get response, indication information indicating whether network slice specific authentication and authorization has been performed on the S-NSSAI on which authentication needs to be performed. In other words, the authentication status of the S-NSSAI on which authentication needs to be performed is sent to the first AMF network element. The S-NSSAI on which authentication needs to be performed includes the target network slice. For example, Table 1 provides a possible manner of storing S-NSSAI information by the UDM network element.

**Table 1: S-NSSAI information stored by the UDM network element**

| S-NSSAI subscribed by the terminal device | Whether secondary authentication needs to be performed on the S-NSSAI | Authentication status of the S-NSSAI on which the authentication procedure needs to be performed |
|---|---|---|
| First S-NSSAI | Yes | Yes: An authentication result is a success |
| Second S-NSSAI | Yes | No |
| Third S-NSSAI | Yes | No |
| Fourth S-NSSAI | No | |

In a specific implementation, after sending the subscribed S-NSSAI to the first AMF network element, the UDM network element may alternatively send the authentication status of the target network slice to the first AMF network element based on the request of the first AMF network element. For example, the first AMF network element invokes the service-oriented operation Nudm_SDM_Get of the UDM network element to obtain the subscribed S-NSSAI of UE. The subscribed S-NSSAI includes the indication information, used to indicate whether the network slice specific authentication and authorization needs to be performed on the S-NSSAI. The UDM network element sends, to the first AMF network element by using the Nudm_SDM_Get response, the subscribed S-NSSAI of the terminal device and the indication information indicating whether authentication needs to be performed on each piece of subscribed S-NSSAI. Then, the first AMF network element invokes a service-oriented operation Nudm_UECM_Get request of the UDM network element, carries the S-NSSAI on which the authentication procedure needs to be performed, and queries the UDM network element for the authentication status of the S-NSSAI. The UDM network element returns the authentication status corresponding to the S-NSSAI to the first AMF network element by using the Nudm_UECM_Get response.

403: The first AMF network element determines, based on the received authentication status of the target network slice, whether to perform the authentication procedure on the target network slice.

Case 1: If the requested NSSAI carried when the terminal device initiates the registration procedure for the first PLMN includes the S-NSSAI on which network slice specific authentication and authorization needs to be performed, and the first AMF network element indicates, by using the authentication status sent by the UDM, that the authentication procedure has been performed on the S-NSSAI, the first AMF network element no longer performs the authentication procedure on the S-NSSAI. It should be noted that the authentication procedures described herein and below all refer to secondary authentication procedures, namely, network slice specific authentication and authorization. The first AMF network element determines allowed NSSAI based on the authentication status. The following describes an example with reference to Table 1. It is assumed that the requested NSSAI carried when the terminal device initiates the registration procedure for the first PLMN includes the first S-NSSAI and the fourth S-NSSAI, the first AMF network element learns, by using the authentication status sent by the UDM network element, that authentication has been performed on the first S-NSSAI and authentication does not need to be performed on the fourth S-NSSAI. In this case, the first AMF network element determines that authentication does not need to be performed on the first S-NSSAI and the fourth S-NSSAI. Because an authentication result of the first S-NSSAI is a success, the first AMF network element determines that the allowed NSSAI includes the first S-NSSAI and the fourth S-NSSAI, that is, the first AMF network element determines that the terminal device is allowed to access the first S-NSSAI and the fourth S-NSSAI. Alternatively, if the authentication result of the first S-NSSAI is a failure, the first AMF network element determines that the allowed NSSAI includes only the fourth S-NSSAI, that is, the first AMF network element determines that the terminal device is allowed to access the fourth S-NSSAI, but is not allowed to access the first S-NSSAI. In the example in Case 1, the first S-NSSAI is equivalent to the target network slice in this application.

Case 2: If the requested NSSAI includes the S-NSSAI on which network slice specific authentication and authorization needs to be performed, and the first AMF network element determines, based on the authentication status sent by the UDM, that no authentication procedure has been performed on the S-NSSAI. In this case, the first AMF network element initiates a network slice specific authentication and authorization procedure on each piece of S-NSSAI on which authentication needs to be performed but is not performed. After the procedure ends, step 404 is performed. With reference to Table 1, it is assumed that the requested NSSAI carried by the terminal device includes the second S-NSSAI and the third S-NSSAI. The first AMF network element obtains authentication statuses of the second S-NSSAI and the third S-NSSAI from information sent by the UDM network element. That is, network slice specific authentication and authorization needs to be performed on both the second S-NSSAI and the third S-NSSAI, and no authentication procedure has been performed on the second S-NSSAI and the third S-NSSAI performs. In this case, the first AMF network element initiates the network slice specific authentication and authorization procedure on the second S-NSSAI and the third S-NSSAI. After the network slice specific authentication and authorization procedure ends, the AMF network element continues to perform step 404. In the example in Case 1, the second S-NSSAI and the third S-NSSAI are equivalent to the target network slice in this application.

404: After the network slice specific authentication and authorization procedure ends, the first AMF network element notifies the UDM network element of the authentication status of the target network slice.

For example, after performing the network slice specific authentication and authorization procedure on the second S-NSSAI and the third S-NSSAI, the first AMF network element notifies the UDM network element of the authentication statuses of the second S-NSSAI and the third S-NSSAI. The authentication statuses indicate authentication results of the second S-NSSAI and the third S-NSSA. For example, in a possible implementation, the first AMF network element may invoke a service-oriented operation Nudm_UECM_Update of the UDM network element to store the authentication result of the S-NSSAI in the UDM network element.

In a specific implementation, during the network slice specific authentication and authorization procedure, the first AMF network element may receive, from an AUSF network element or an authentication, authorization, and accounting server (authentication, authorization, accounting server, AAA Server), a timer (timer) corresponding to the S-NSSAI, or the first AMF network element determines, based on local configuration information, a timer (timer) corresponding to the S-NSSAI. The first AMF network element may further store the authentication result of the S-NSSAI and the timer (timer) in the UDM network element, and the timer (timer) is used to indicate a validity period of the authentication result of the S-NSSAI. For example, the first AMF network element may invoke the service-oriented operation Nudm_UECM_Update of the UDM network element to store the authentication result of the S-NSSAI and the timer (timer) in the UDM network element. After the timer expires, the authentication result of the S-NSSAI becomes invalid. Optionally, the UDM network element may delete the authentication result of the S-NSSAI after the timer expires. For example, if the UDM network element stores only the authentication result of the S-NSSAI, and does not have a corresponding timer (timer), it indicates that there is no time limit on validity of the authentication result of the S-NSSAI. In a specific implementation, when authentication needs to be performed on a plurality of pieces of S-NSSAI, after network slice specific authentication and authorization procedures of all the pieces of S-NSSAI end, the first AMF network element may send authentication results to the UDM network element in a plurality of times, or may send the authentication results to the UDM network element at a time. For example, the first AMF network element may invoke the service-oriented operation Nudm_UECM_Update of the UDM in a plurality of times to store the authentication result of the S-NSSAI and the timer (timer) in the UDM network element. For example, after the network slice specific authentication and authorization procedure on the second S-NSSAI ends, the first AMF network element may invoke the service-oriented operation Nudm_UECM_Update of the UDM to store the authentication result of the second S-NSSAI and the timer (timer) in the UDM network element. After the network slice specific authentication and authorization procedure on the third S-NSSAI ends, the first AMF network element invokes the service-oriented operation Nudm_UECM_Update of the UDM network element again to store the authentication result of the third S-NSSAI and the timer (timer) in the UDM network element. It should be noted that a quantity of times of sending the authentication result is not limited in this embodiment of this application. For example, target network slices include N network slices, N is an integer greater than 0, the UDM network element may receive a message sent by the AMF network element in M times, the message that is sent in M times is used to update authentication statuses of the target network slices in the UDM network element, and M is not greater than N. For example, when authentication needs to be performed on four network slices, the first AMF network element may invoke the service-oriented operation Nudm_UECM_Update once to store authentication results of the four network slices in the UDM network element. Alternatively, the first AMF network element may invoke the service-oriented operation Nudm_UECM_Update twice. In the first time, the authentication results corresponding to the network slice 1 and the network slice 2 are stored in the UDM network element, and in the second time, the authentication results corresponding to the network slice 3 and the network slice 4 are stored in the UDM network element. Alternatively, the first AMF network element may invoke the service-oriented operation Nudm_UECM_Update in three times. In the first time, the authentication results corresponding to the network slice 1 and the network slice 2 are stored in the UDM network element, in the second time, the authentication result corresponding to the network slice 3 is stored in the UDM network element, and in the third time, the authentication result corresponding to the network slice 4 is stored in the UDM network element.

405: The UDM network element learns of the corresponding authentication status of the target network slice.

For example, assuming that the UDM network element learns, by using the authentication status of the target network slice that is sent by the first AMF network element, that the authentication result of the second S-NSSAI is a success, and the authentication result of the third S-NSSAI is a failure, the UDM updates the stored information. For example, corresponding to Table 1, Table 2 provides a possible manner of updating S-NSSAI information by the UDM network element.

**Table 2: S-NSSAI information updated by the UDM network element**

| S-NSSAI subscribed by the terminal device | Whether secondary authentication needs to be performed on the S-NSSAI | Authentication status of the S-NSSAI on which the authentication procedure needs to be performed |
|---|---|---|
| First S-NSSAI | Yes | Yes: An authentication result is a success |
| Second S-NSSAI | Yes | Yes: The authentication result is a success, and optionally, timer-1 |
| Third S-NSSAI | Yes | No: The authentication result is a failure, and optionally, timer-2 |
| Fourth S-NSSAI | No | |

406: The terminal device initiates a registration procedure for a second PLMN by using a second access technology.

When the terminal device initiates the registration procedure, requested NSSAI is carried. An access device selects, for the terminal based on the NSSAI, an AMF network element corresponding to an appropriate network slice, and then forwards a registration request to the AMF network element, and the AMF entity receives and processes the registration request. The access device corresponding to the second access technology is omitted in FIG. 4. A second AMF network element provides a service for the terminal device.

407: The UDM network element sends an authentication status of S-NSSAI to the second AMF network element.

In a specific implementation, the second AMF network element may request the UDM network element to send subscribed S-NSSAI of the terminal device, and the UDM network element sends the subscribed S-NSSAI of the terminal device to the second AMF network element based on a request of the second AMF network element, and sends the authentication status of the target network slice to the AMF network element. Specifically, for understanding, refer to descriptions in step 402 that the first AMF network element may request the UDM network element to send the subscribed S-NSSAI of the terminal device, and the UDM network element sends the subscribed S-NSSAI of the terminal device to the first AMF network element based on the request of the first AMF network element, and sends the authentication status of the target network slice to the AMF network element. Details are not described herein again.

In a specific implementation, after sending the subscribed S-NSSAI to the second AMF network element, the UDM network element may alternatively send the authentication status of the target network slice to the second AMF network element based on the request of the second AMF network element. Specifically, for understanding, refer to the descriptions in step 402 that the UDM network element may alternatively send the authentication status of the target network slice to the first AMF network element based on the request of the first AMF network element after sending the subscribed S-NSSAI to the first AMF network element. Details are not described herein again.

408: The second AMF network element determines, based on the received authentication status of the target network slice, whether to perform the authentication procedure on the target network slice.

Specifically, for understanding, refer to step 403 that the first AMF network element determines, based on the received authentication status of the target network slice, whether to perform the authentication procedure on the target network slice. Herein, to clearly describe a case that repeated authentication does not need to be performed on a network slice on which the authentication procedure has been performed, the example in step 403 is still used for further description. It is assumed that the requested NSSAI carried when the terminal device initiates the registration procedure for the second PLMN includes the second S-NSSAI and the third S-NSSAI. The second AMF network element obtains, by using the authentication status sent by the UDM, that authentication has been performed on the second S-NSSAI, and the authentication result is a success. The second AMF network element obtains, by using the authentication status sent by the UDM network element, that authentication has been performed on the third S-NSSAI, and the authentication result is a failure. The authentication results of the second S-NSSAI and the third S-NSSAI are corresponding results obtained after the first AMF network element performs authentication procedures on the second S-NSSAI and the third S-NSSAI in the first PLMN. For details, refer to steps 404 and 405 for understanding. In this case, the second AMF network element determines that the authentication procedures are no longer performed on the second S-NSSAI and the third S-NSSAI in the second PLMN. The second AMF network element directly determines the allowed NSSAI based on the obtained authentication results of the second S-NSSAI and the third S-NSSAI, and the allowed NSSAI includes only the second S-NSSAI. That is, the second AMF network element determines that the terminal device is allowed to access the second S-NSSAI, but is not allowed to access the third S-NSSAI.

In a specific embodiment, if the authentication result further corresponds to validity time, namely, the timer (timer), the second AMF network element learns, by using the authentication status sent by the UDM network element, that authentication has been performed on the second S-NSSAI, and the authentication result is a success. In addition, the second AMF network element obtains, from the UDM, the timer-1 corresponding to the authentication status of the second S-NSSAI, and the authentication result is still within the validity period, that is, the timer-1 does not expire. The second AMF network element learns, by using the authentication status sent by the UDM network element, that authentication has been performed on the third S-NSSAI, and the authentication result is a failure. In addition, the second AMF network element obtains, from the UDM network element, the timer-2 corresponding to the authentication status of the third S-NSSAI, and the authentication result is still within the validity period, that is, the timer-2 does not expire. The authentication results of the second S-NSSAI and the third S-NSSAI are corresponding results obtained after the first AMF network element performs the authentication procedures on the second S-NSSAI and the third S-NSSAI in the first PLMN. For details, refer to steps 404 and 405 for understanding. In this case, the second AMF network element determines that the authentication procedures are no longer performed on the second S-NSSAI and the third S-NSSAI in the second PLMN. The second AMF network element directly determines the allowed NSSAI based on the obtained authentication results of the second S-NSSAI and the third S-NSSAI, and the allowed NSSAI includes the second S-NSSAI and the third S-NSSAI. That is, the second AMF network element determines that the terminal device is allowed to access the second S-NSSAI and the third S-NSSAI.

Certainly, the S-NSSAI subscribed by the terminal device is not limited to the four pieces of S-NSSAI mentioned in Table 1 and Table 2. The first S-NSSAI, the second S-NSSAI, the third S-NSSAI, and the fourth S-NSSAI do not represent a limitation on the quantity, but are used merely for ease of description. It is assumed that the S-NSSAI subscribed by the terminal device further includes fifth S-NSSAI, and the requested NSSAI carried when the terminal device initiates the registration procedure for the second PLMN further includes the fifth S-NSSAI. If the secondary authentication procedure needs to be performed on the fifth S-NSSAI and no authentication procedure has been performed on the fifth S-NSSAI, the second AMF network element sends an authentication status of the fifth S-NSSAI to the UDM after performing the authentication procedure on the fifth S-NSSAI, and the UDM network element learns of the authentication status of the fifth S-NSSAI. Specifically, for understanding, refer to step 404 that the first AMF network element notifies the UDM network element of the authentication status of the target network slice, and step 405 that the UDM network element learns of the corresponding authentication status of the target network slice. Details are not described herein again.

In the method 400, the authentication result of the network slice is stored in the UDM network element. Specifically, the AMF network element stores the authentication result of the network slice in the UDM network element, so that it can avoid a waste of signaling between the terminal device and a core network side caused because the AMF network element repeatedly initiates a network slice authentication procedure on a same piece of S-NSSAI in different PLMNs by using different access technologies.

In the method 400, it is mentioned that if the requested NSSAI includes the S-NSSAI on which network slice specific authentication and authorization needs to be performed, and no authentication procedure has been performed on the S-NSSAI, the first AMF network element initiates a network slice specific authentication and authorization procedure on each piece of S-NSSAI on which authentication needs to be performed. Specifically, after the first AMF network element determines to trigger the network slice specific authentication and authorization procedure, the first AMF network element exchanges and transfers authentication information of the terminal device with an authentication, authorization, and accounting server (authentication, authorization, and accounting server, AAA Server) through the AUSF network element. If the AAA server is located in a third party, and the AUSF network element cannot directly interact with the AAA server, the AUSF network element may indirectly interact with the AAA server by using an authentication, authorization, and accounting proxy (authentication, authorization, and accounting proxy, AAA proxy). Therefore, an embodiment of this application further provides another method 500. After the first AMF network element determines to trigger the network slice specific authentication and authorization procedure, the AUSF network element sends a query request message to the UDM network element, to request the UDM network element to send the authentication status of the target network slice. This method is described in detail below.

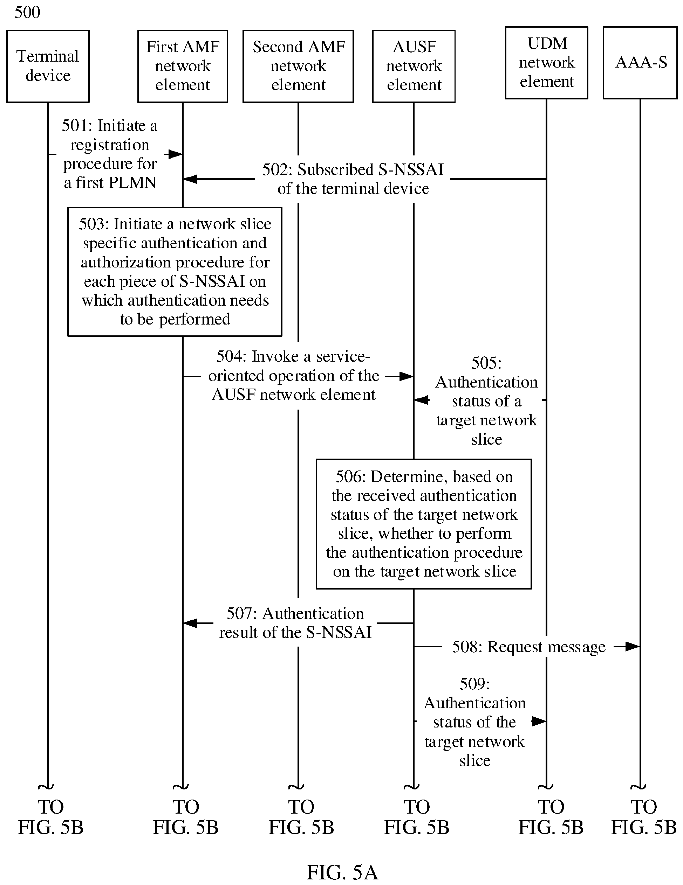

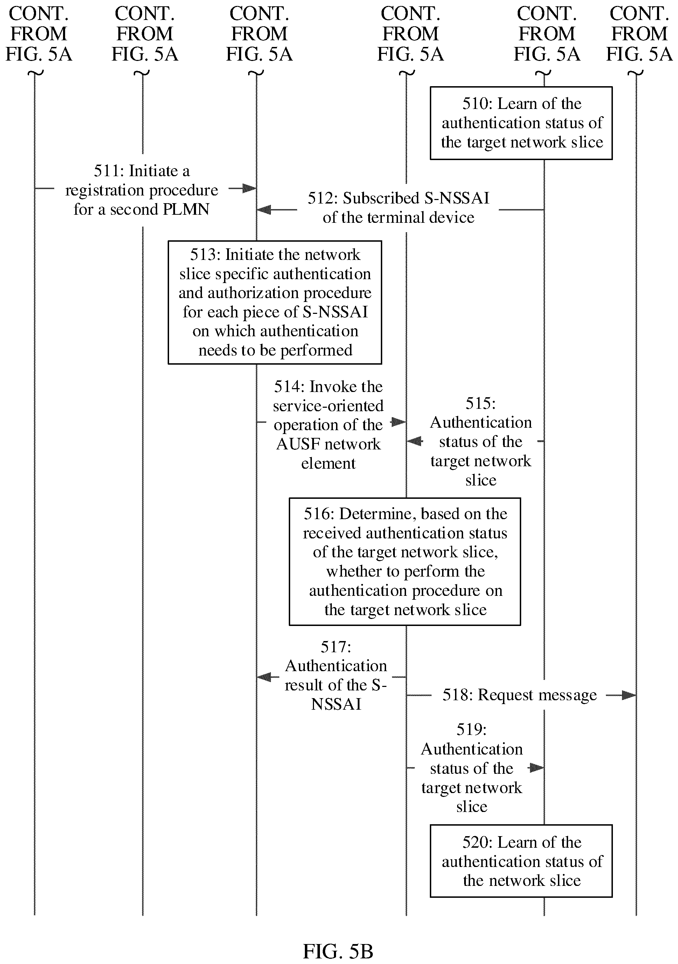

FIG. 5Aand FIG. 5B are a schematic flowchart of a communication method 500 according to this application.

As shown in FIG. 5A and FIG. 5B, the communication method 500 provided in this application may include the following steps.

501: A terminal device initiates a registration procedure for a first PLMN by using a first access technology.

When the terminal device initiates the registration procedure, requested NSSAI is carried. An access device selects, for the terminal based on the NSSAI, an AMF network element corresponding to an appropriate network slice, and then forwards a registration request to the AMF network element, and the AMF entity receives and processes the registration request. The access device corresponding to the first access technology is omitted in FIG. 5A and FIG. 5B. A first AMF network element provides a service for the terminal device.

502: The first AMF network element receives subscribed S-NSSAI of the terminal device sent by a UDM network element.

For example, the first AMF network element may invoke a service-oriented operation Nudm_SDM_Get of the UDM to obtain the subscribed S-NSSAI of the terminal device. The UDM network element sends, to the first AMF network element by using an Nudm_SDM_Get response, the subscribed S-NSSAI of the terminal device and indication information indicating whether authentication needs to be performed on each piece of S-NSSAI.

503: The first AMF network element initiates a network slice specific authentication and authorization procedure on each piece of S-NSSAI on which authentication needs to be performed.

If the requested NSSAI carried when the terminal device initiates the registration procedure for the first PLMN includes the S-NSSAI on which the network slice specific authentication and authorization needs to be performed, the first AMF network element performs a secondary authentication procedure on the S-NSSAI. The first AMF requests the terminal device to obtain an extensible authentication protocol identity (extensible authentication protocol identity, EAP ID), and carries the S-NSSAI. The terminal device sends the EAP ID to the first AMF network element.

504: The first AMF network element invokes a service-oriented operation of an AUSF network element.

The first AMF network element invokes the service-oriented operation of the AUSF network element to request the AUSF network element to perform an authentication procedure. For example, the first AMF network element may invoke Nausf_Communication_EAP MessageTransfer to request the AUSF network element to perform the authentication procedure. The service-oriented operation may carry an EAP ID response message (EAP ID response), an address of an AAA-S server, a generic public subscription identifier (generic public subscription identifier, GPSI), an identifier of the first AMF network element, and the S-NSSAI. The GPSI may be an external identifier of the terminal device. For example, when the terminal device is a mobile phone, the GPSI may be a mobile phone number or an email address. The address of the AAA-S server may be preconfigured on the first AMF network element or stored in subscription data of UE. In this case, the first AMF network element obtains the address of the AAA-S server from the UDM. The S-NSSAI is an identifier of the network slice on which the network slice specific authentication and authorization procedure is performed in step 503.

505: The UDM network element sends an authentication status of a target network slice to the AUSF network element based on a request of the AUSF.

When the AUSF network element is triggered to perform the authentication procedure, the AUSF network element may first send a request message to the UDM network element, to request the UDM network element to send the authentication status of the target network slice, and the UDM network element may send the authentication status of the target network slice to the AUSF network element. For example, the AUSF network element invokes a service-oriented operation Nudm_UECM_Get request of the UDM network element, carries the S-NSSAI on which the authentication procedure needs to be performed, and queries the UDM network element for an authentication status of the S-NSSAI. The UDM network element returns the authentication status corresponding to the S-NSSAI to the AUSF network element by using an Nudm_UECM_Get response. Specifically, the authentication status may include that no authentication procedure has been performed on the S-NSSAI, the authentication procedure has been performed on the S-NSSAI and an authentication result is a success, or the authentication procedure has been performed on the S-NSSAI and the authentication result is a failure.

506: The AUSF network element determines, based on the received authentication status of the target network slice, whether to perform the authentication procedure on the target network slice.

Case 1: If the AUSF network element obtains an authentication result of the S-NSSAI based on an authentication status of target S-NSSAI, step 507 is performed.

Case 2: If the AUSF network element determines, based on an authentication status of target S-NSSAI, that no authentication procedure has been performed on the S-NSSAI, the AUSF continues to perform the authentication procedure on the S-NSSAI. That is, the AUSF network element performs step 508 and step 509.

507: The AUSF network element sends the authentication result of the S-NSSAI obtained from the UDM network element to the first AMF network element.

If the AUSF network element learns, from the UDM network element, that the authentication procedure has been performed on the S-NSSAI and learns of the corresponding authentication result, it indicates that the network slice specific authentication and authorization procedure has been performed on the S-NSSAI. In this case, the AUSF network element directly returns the authentication result of the S-NSSAI obtained from the UDM network element to the first AMF network element without repeatedly performing the network slice specific authentication and authorization procedure. The first AMF network element determines allowed NSSAI based on the authentication result.

508: The AUSF network element sends the request message to the AAA-S.

The request message is used to request the AAA-S to perform network slice specific authentication and authorization on the S-NSSAI.

509: After the network slice specific authentication and authorization procedure ends, the AUSF network element sends the authentication status of the target network slice to the UDM network element.

For example, after network slice specific authentication and authorization ends, the AUSF network element may invoke a service-oriented operation Nudm_UECM_Update of the UDM to store the authentication result of the S-NSSAI in the UDM network element.

In a specific implementation, during the network slice specific authentication and authorization procedure, the AUSF network element may receive, from the AAA-S, a timer (timer) corresponding to the S-NSSAI, or the AUSF network element may determine, based on local configuration information, a timer (timer) corresponding to the S-NSSAI. The AUSF network element may further send the authentication result of the S-NSSAI and the timer (timer) to the UDM network element, and the timer (timer) is used to indicate a validity period of the authentication result of the S-NSSAI. For example, the AUSF network element may invoke the service-oriented operation Nudm_UECM _Update of the UDM network element to store the authentication result of the S-NSSAI and the timer (timer) in the UDM network element. After the timer expires, the authentication result becomes invalid. Optionally, the UDM network element may delete the authentication result of the S-NSSAI after the timer expires. For example, if the UDM network element stores only the authentication result of the S-NSSAI, and does not have a corresponding timer (timer), it indicates that there is no time limit on validity of the authentication result of the S-NSSAI.

In a specific implementation, when authentication needs to be performed on a plurality of pieces of S-NS SAI, after network slice specific authentication and authorization procedures of all the pieces of S-NSSAI end, the AUSF network element may send authentication results to the UDM network element in a plurality of times, or may send the authentication results to the UDM network element at a time. Specifically, for understanding, refer to step 404 in the method 400 that the first AMF network element may send the authentication results to the UDM network element in a plurality of times, or may send the authentication results to the UDM network element at a time. Details are not described herein again.

510: The UDM network element learns of the corresponding authentication status of the network slice.

After receiving the authentication status sent by the AUSF network element, the UDM network element updates the authentication status of the corresponding network slice.

511: The terminal device initiates a registration procedure for a second PLMN by using a second access technology.

When the terminal device initiates the registration procedure, requested NSSAI is carried. An access device selects, for the terminal based on the NSSAI, an AMF network element corresponding to an appropriate network slice, and then forwards a registration request to the AMF network element, and the AMF entity receives and processes the registration request. The access device corresponding to the second access technology is omitted in FIG. 5A and FIG. 5B. A second AMF network element provides a service for the terminal device.

512: The second AMF network element receives the subscribed S-NSSAI of the terminal device sent by the UDM network element.

513: The second AMF network element initiates the network slice specific authentication and authorization procedure on each piece of S-NSSAI on which authentication needs to be performed.

514: The second AMF network element invokes the service-oriented operation of the AUSF network element.

For the purpose of understanding step 512 to step 514, refer to step 502 to step 504 that the first AMF network element receives the subscribed S-NSSAI of the terminal device sent by the UDM network element, the first AMF network element initiates the network slice specific authentication and authorization procedure on each piece of S-NSSAI on which authentication needs to be performed, and the first AMF network element invokes the service-oriented operation of the AUSF network element. Details are not described herein again.

515: The UDM network element sends the authentication status of the target network slice to the AUSF network element based on the request of the AUSF.

For specific descriptions, refer to step 505.

516: The AUSF network element determines, based on the received authentication status of the target network slice, whether to perform the authentication procedure on the target network slice.

Case 1: If the AUSF network element obtains an authentication result of the S-NSSAI based on an authentication status of target S-NSSAI, step 517 is performed.

Case 2: If the AUSF network element determines, based on an authentication status of target S-NSSAI, that no authentication procedure has been performed on the S-NSSAI, the AUSF continues to perform the authentication procedure on the S-NSSAI. That is, the AUSF performs step 518 and step 519.

517: The AUSF network element sends the authentication result of the S-NSSAI obtained from the UDM network element to the second AMF network element.

518: The AUSF network element sends the request message to the AAA-S.

519: After the network slice specific authentication and authorization procedure ends, the AUSF network element sends the authentication status of the target network slice to the UDM network element.

520: The UDM network element learns of the corresponding authentication status of the network slice.

For the purpose of understanding step 515 to step 520, refer to step 505 to step 510. Details are not described herein again.

In the method 500, the authentication result of the network slice is stored in the UDM network element. Specifically, the AUSF network element stores the authentication result of the network slice in the UDM network element, so that it can avoid a waste of signaling between the terminal device and a core network side caused because the AMF network element repeatedly initiates a network slice authentication procedure on a same piece of S-NSSAI in different PLMNs by using different access technologies.

It should be noted that the AUSF network element may simultaneously receive authentication requests sent by two AMF network elements. For example, in a specific implementation, when the UE registers with a first PLMN by using a first access technology, the AUSF network element receives a first message sent by a first AMF network element in the first PLMN, where the first message is used to request to perform a first authentication procedure on the target network slice. When the AUSF network element performs the first authentication procedure on the target network slice, the UE registers with a second PLMN by using a second access technology, and the AUSF network element receives a second message sent by a second AMF network element in the second PLMN, where the second message is used to request to perform a secondary authentication procedure on the target network slice. In this case, the AUSF network element may send indication information to the second AMF network element, and the indication information is used to indicate that the secondary authentication procedure is suspended. After the AUSF network element learns of the authentication result of the target network slice, the AUSF network element sends the authentication result of the target network slice to the second AMF network element.

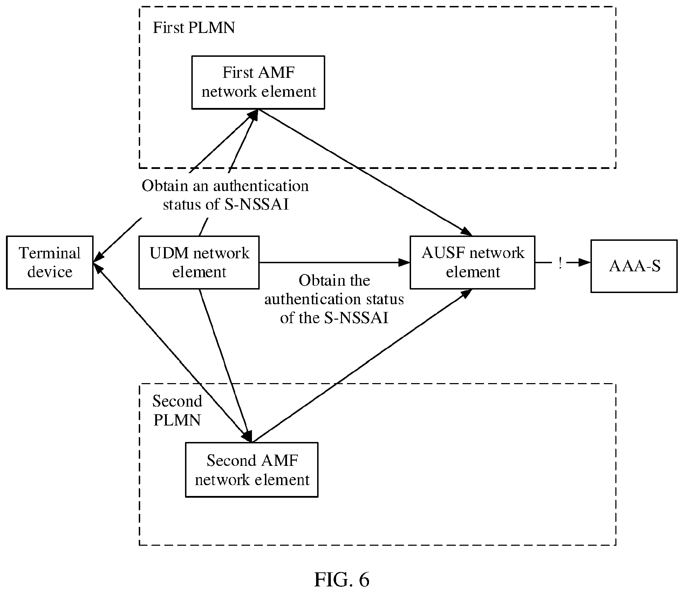

When the terminal device sequentially registers with the first PLMN and the second PLMN by using different access technologies, the requested NSSAI includes same S-NSSAI on which authentication needs to be performed. When authentication has been performed on the S-NSSAI in the first PLMN, two methods regarding how to optimize the authentication procedure on the S-NSSAI in the second PLMN are provided in the method 400 and the method 500. As shown in FIG. 6, the first AMF is used as an example for description. In the registration procedure in the method 400, if the first AMF network element determines that the requested NSSAI includes a piece of S-NSSAI, and authentication needs to be performed on the S-NSSAI, the first AMF network element first obtains an authentication status of the S-NSSAI from the UDM network element; if the authentication procedure has been performed on the S-NSSAI before, the AMF network element directly determines the allowed NSSAI of the terminal device based on the authentication result. In the registration procedure in the method 500, if the first AMF network element determines that the requested NSSAI includes a piece of S-NSSAI, and authentication needs to be performed on the S-NSSAI, in the authentication procedure, the AUSF network element obtains an authentication status of the S-NSSAI from the UDM network element; if the authentication procedure has been performed on the S-NSSAI before, the AUSF network element directly returns an authentication result to the AMF network element, and triggers the AMF network element to determine, based on the authentication result, the allowed NSSAI of the terminal device.

In specific implementation processes of the method 400 and the method 500, there may be a scenario in which the subscription information of the S-NSSAI is changed. For example, when both the allowed NSSAI of the first PLMN and the allowed NSSAI of the second PLMN include a same piece of S-NSSAI, if the S-NSSAI on which a network slice specific authentication and authorization procedure does not need to be performed is changed to the S-NSSAI on which the network slice specific authentication and authorization procedure needs to be performed, the two AMF network elements separately perform network slice specific authentication and authorization procedures on the same piece of S-NSSAI after the UDM network element delivers new subscription information to the two AMF network elements. As a result, required signaling transmitted by a core network for authentication is quite redundant. This problem is described in detail below.

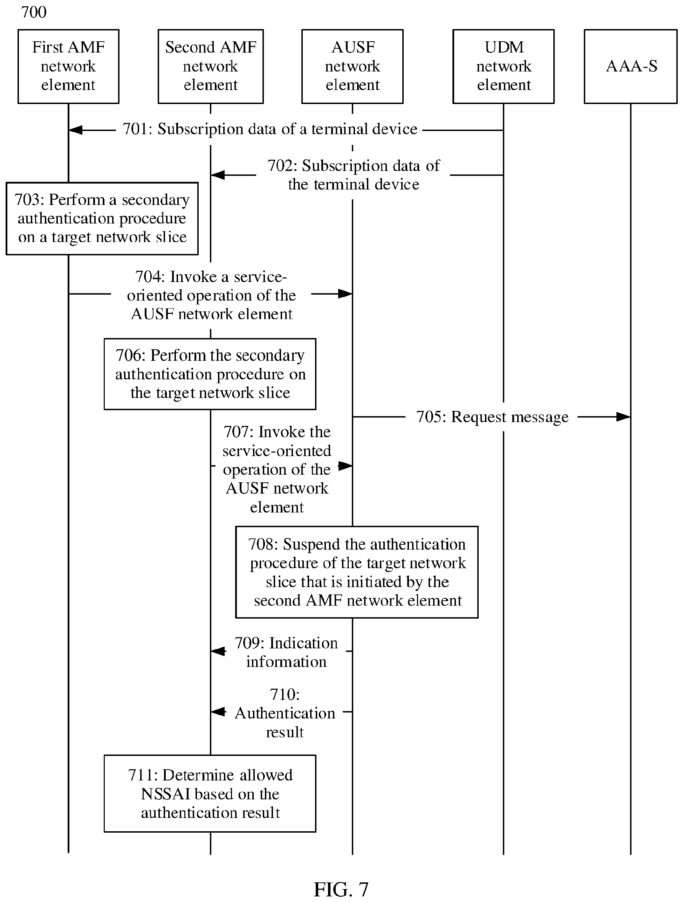

FIG. 7 is a schematic flowchart of a communication method 700 according to this application.

As shown in FIG. 7, the communication method 700 provided in this application may include the following steps.

701: A UDM network element sends subscription data of a terminal device to a first AMF network element.

702: The UDM network element sends the subscription data of the terminal device to a second AMF network element.

In the method 400 and the method 500, when the terminal device initiates a registration procedure, the UDM network element sends the subscription data of the terminal device to the AMF network element. Specifically, the UDM network element may separately send subscribed S-NSSAI of the terminal device and an authentication status of the S-NSSAI to the first AMF network element and the second AMF network element. Assuming that subscription information of the terminal device is changed at a moment, because the UDM network element stores identifiers of two different AMF network elements, the UDM network element needs to separately send the subscription data of the terminal device to the first AMF network element and the second AMF network element. For the purpose of distinguishing, the subscription data sent in the first time is referred to as old subscription data, and the subscription information changed later is referred to as new subscription data. For example, the UDM network element may invoke Nudm_SDM_Notification to separately send the subscription data of the terminal device to the first AMF network element and the second AMF network element. The subscription data of the terminal device includes the S-NSSAI subscribed by the terminal device, and indication information indicating whether network slice specific authentication and authorization needs to be performed on the S-NSSAI.

703: The first AMF network element performs a secondary authentication procedure on a target network slice.

The first AMF network element determines that, in the obtained new subscription data, a piece of S-NSSAI on which a network slice specific authentication and authorization procedure does not need to be performed is changed to a piece of S-NSSAI on which a network slice specific authentication and authorization procedure needs to be performed, and the S-NSSAI on which network slice specific authentication and authorization needs to be performed is in allowed NSSAI. In this case, the first AMF network element initiates the secondary authentication procedure on the S-NSSAI, and requests to obtain an EAP ID from the terminal device. For example, it is assumed that the terminal device carries requested NSSAI when initiating a registration procedure for a first PLMN. It is assumed that the requested NSSAI includes first S-NSSAI, second S-NSSAI, third S-NSSAI, and fourth S-NSSAI, and the access device selects, for the terminal based on the NSSAI, an AMF network element corresponding to an appropriate network slice. It is assumed that the first AMF network element provides a service for the terminal device. The first AMF network element learns, from the UDM network element, that the secondary authentication procedure needs to be performed on the first S-NSSAI and the second S-NSSAI, and the secondary authentication procedure does not need to be performed on the third S-NSSAI and the fourth S-NSSAI. In addition, the first AMF network element further learns, from the UDM network element, that an authentication procedure has been performed on the first S-NSSAI and an authentication result is a success, and no authentication procedure has been performed on the second S-NSSAI. In this case, the first AMF network element no longer performs authentication on the first S-NSSAI again, and the first AMF network element determines that the allowed NSSAI includes the first S-NSSAI, the third S-NSSAI, and the fourth S-NSSA, and sends the allowed NSSAI to the terminal device. If the first AMF network element performs an authentication procedure on the second S-NSSAI, and an authentication result is a success, the first AMF network element updates the allowed NSSAI to include the first S-NSSAI, the second S-NSSAI, third S-NSSAI, and fourth S-NSSA. If the first AMF network element performs the authentication procedure on the second S-NSSAI, and the authentication result is a failure, the first AMF network element does not need to update the allowed NSSAI. It is assumed that at a moment, the first AMF network element receives the new subscription data of the terminal device sent by the UDM network element, and indicates that the subscribed S-NSSAI of the terminal device includes the second S-NSSAI, the third S-NSSAI, and the fourth S-NSSAI. The secondary authentication procedure needs to be performed on the second S-NSSAI and the third S-NSSAI, and the authentication procedure does not need to be performed on the fourth S-NSSAI. It can be learned that the second S-NSSAI on which the network slice specific authentication and authorization procedure does not need to be performed is changed to the second S-NSSAI on which the network slice specific authentication and authorization procedure needs to be performed, and the current allowed NSSAI includes the second S-NSSAI. In this case, the first AMF network element needs to perform the secondary authentication procedure on the second S-NSSAI. Specifically, go to step 704.

704: The first AMF network element invokes a service-oriented operation of an AUSF network element.

The first AMF network element invokes the service-oriented operation of the AUSF network element to request the AUSF network element to perform an authentication procedure. For example, the first AMF network element may invoke Nausf_Communication_EAP MessageTransfer to request the AUSF network element to perform the authentication procedure. The service-oriented operation may carry an EAP ID response message (EAP ID response), an address of an AAA-S server, a generic public subscription identifier (generic public subscription identifier, GPSI), an identifier of the first AMF network element, and the S-NSSAI. The GPSI may be an external identifier of the terminal device. For example, when the terminal device is a mobile phone, the GPSI may be a mobile phone number or an email address. The address of the AAA-S server may be preconfigured on the AMF network element. The S-NSSAI is an identifier of the network slice on which the network slice specific authentication and authorization procedure is performed in step 703.

705: The AUSF network element sends a request message to the AAA-S, to request the AAA-S to perform the secondary authentication procedure on the target network slice.

For the secondary authentication procedure performed by the first AMF network element in step 703 to step 705, refer to the steps in the method 400 or the method 500. Details are not described herein again.

706: Before the authentication procedure initiated by the first AMF network element ends, the second AMF network element performs the secondary authentication procedure on the target network slice.

For the purpose of understanding the secondary authentication procedure performed by the second AMF network element on the target network slice, refer to the secondary authentication procedure performed by the first AMF network element on the target network slice in step 703. Details are not described herein again. It should be noted that the S-NSSAI on which authentication needs to be performed is included in the allowed NSSAI corresponding to two different access technologies. Therefore, the first AMF and the second AMF separately initiate the network slice specific authentication and authorization procedure on the same piece of S-NSSAI.

707: The second AMF network element invokes the service-oriented operation of the AUSF network element.

The second AMF network element invokes the service-oriented operation of the AUSF network element to request the AUSF network element to perform an authentication procedure. For example, the second AMF network element may invoke Nausf_Communication_ EAP MessageTransfer to request the AUSF network element to perform the authentication procedure. The service-oriented operation may carry an EAP ID response message (EAP ID response), an address of an AAA-S server, a generic public subscription identifier (generic public subscription identifier, GPSI), an identifier of the second AMF network element, and the S-NSSAI. The GPSI may be an external identifier of the terminal device. For example, when the terminal device is a mobile phone, the GPSI may be a mobile phone number or an email address. The address of the AAA-S server may be preconfigured on the AMF network element. The S-NSSAI is an identifier of the network slice on which the network slice specific authentication and authorization procedure is performed in step 706. The AUSF network element in step 704 and the AUSF network element in step 707 are AUSF network elements located in a home public land mobile network (home public land mobile network, HPLMN).

708: The AUSF network element suspends the authentication procedure of the target network slice that is initiated by the second AMF network element.

The AUSF network element determines that before the authentication procedure initiated by the first AMF network element ends, the AUSF network element learns, based on the GPSI and the S-NSSAI that are sent by the second AMF network element in step 707, that the second AMF network element initiates the authentication procedure on the same piece of S-NSSAI of the same terminal device. In this case, the AUSF network element triggers the second AMF network element to suspend the authentication procedure of the target network slice.

In a specific implementation, the method may further include the following steps.

709: The AUSF network element sends indication information to the second AMF network element.

The indication information is used to indicate that the secondary authentication procedure on the S-NSSAI that is initiated by the second AMF network element in step 706 is temporarily suspended.

710: After the authentication procedure initiated by the first AMF network element ends, the AUSF network element sends the authentication result to the second AMF network element.

In a specific implementation, it can be learned from the method 400 and the method 500 that after the authentication procedure initiated by the first AMF network element ends, the first AMF or the AUSF network element may further send the authentication result to the UDM network element.

In the method 700, after learning of the authentication result, the AUSF network element may further send the authentication result to the second AMF network element.

711: The second AMF network element determines the allowed NSSAI based on the authentication result.

For example, in the example of step 703, the first AMF network element needs to perform the secondary authentication procedure on the second S-NSSAI. It is assuming that the second AMF network element also performs the secondary authentication procedure on the second S-NSSAI in step 706, and the first AMF network element first invokes the service-oriented operation of the AUSF network element. When the second AMF network element invokes the service-oriented operation of the AUSF network element, the AUSF determines that the second AMF network element initiates the authentication procedure on the same piece of S-NSSAI of the same terminal device, that is, the authentication procedure on the second S-NSSAI of the same terminal device. In this case, the AUSF network element suspends the authentication procedure initiated by the second AMF network element on the second S-NSSAI. After the authentication procedure initiated by the first AMF network element on the second S-NSSAI ends, the AUSF network element directly sends the result corresponding to the authentication procedure on the second S-NSSAI to the second AMF network element, and the second AMF network element determines, based on the authentication result, the allowed NSSAI of the terminal device in the second PLMN. For example, when the authentication result corresponding to the authentication procedure initiated by the first AMF network element on the second S-NSSAI is a success, the second AMF network element determines, based on the authentication result, that the allowed NSSAI of the terminal device in the second PLMN includes the second S-NSSAI; when the authentication result corresponding to the authentication procedure initiated by the first AMF network element on the second S-NSSAI is a failure, the second AMF network element determines, based on the authentication result, that the allowed NSSAI of the terminal device in the second PLMN does not include the second S-NSSAI.

In the method 700, the AUSF network element determines whether the second authentication procedure is on a same piece of S-NSSAI, and if the second authentication procedure is on the same piece of S-NSSAI, suspends the network slice authentication procedures in one access technology, that is, suspends the second authentication procedure. This can avoid a waste of signaling between the terminal device and the core network side caused because the AMF network element repeatedly initiates the network slice authentication procedure on the same piece of S-NSSAI by using different access technologies. It should be noted that, in some specific application scenarios, the AAA-S may also determine whether the authentication procedure is on the same piece of S-NSSAI. For this scenario, details are described below.

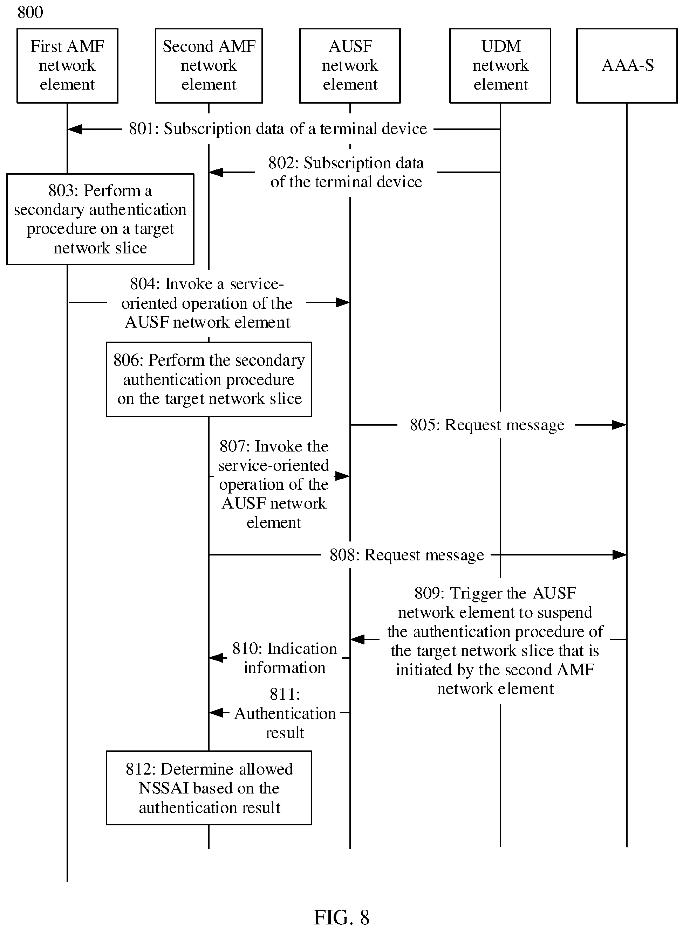

FIG. 8 is a schematic flowchart of a communication method 800 according to this application.

As shown in FIG. 8, the communication method 800 provided in this application may include the following steps.

801: A UDM network element sends subscription data of a terminal device to a first AMF network element.

802: The UDM network element sends the subscription data of the terminal device to a second AMF network element.

803: The first AMF network element performs a secondary authentication procedure on a target network slice.

804: The first AMF network element invokes a service-oriented operation of an AUSF network element.

805: The AUSF network element sends a request message to an AAA-S, to request the AAA-S to perform the secondary authentication procedure on the target network slice.

806: Before the authentication procedure initiated by the first AMF network element ends, the second AMF network element performs the secondary authentication procedure on the target network slice.

807: The second AMF network element invokes the service-oriented operation of the AUSF network element.

For the purpose of understanding step 801 to step 807, refer to step 701 to step 707 in the method 700. Details are not described herein again.

808: The AUSF network element sends the request message to the AAA-S, to request the AAA-S to perform the secondary authentication procedure on the target network slice.

809: The AAA-S triggers the AUSF network element to suspend the authentication procedure of the target network slice that is initiated by the second AMF network element.

The AAA-S determines that before the authentication procedure initiated by the AUSF network element ends, the AUSF network element initiates an authentication procedure on a same piece of S-NSSAI of a same terminal device. In this case, the AAA-S triggers the AUSF network element to suspend the authentication procedure of the target network slice.

In a specific implementation, the method may further include the following steps.

810: The AUSF network element sends indication information to the second AMF network element.

The indication information is used to indicate that the secondary authentication procedure on the S-NSSAI that is initiated by the second AMF network element in step 806 is temporarily suspended.

811: After the authentication procedure initiated by the first AMF network element ends, the AUSF network element sends an authentication result to the second AMF network element.

812: The second AMF network element determines allowed NSSAI based on the authentication result.

For the purpose of understanding step 811 and step 812, refer to step 710 and step 711 in the method 700. Details are not described herein again.

In the method 800, the AAA-S determines whether the second authentication procedure is on a same piece of S-NSSAI, and if the second authentication procedure is on the same piece of S-NSSAI, triggers the AUSF network element to suspend the network slice authentication procedure in one access technology, that is, suspend the second authentication procedure. This can avoid a waste of signaling between the terminal device and the core network side caused because the AMF network element repeatedly initiates the network slice authentication procedure on the same piece of S-NSSAI by using different access technologies.

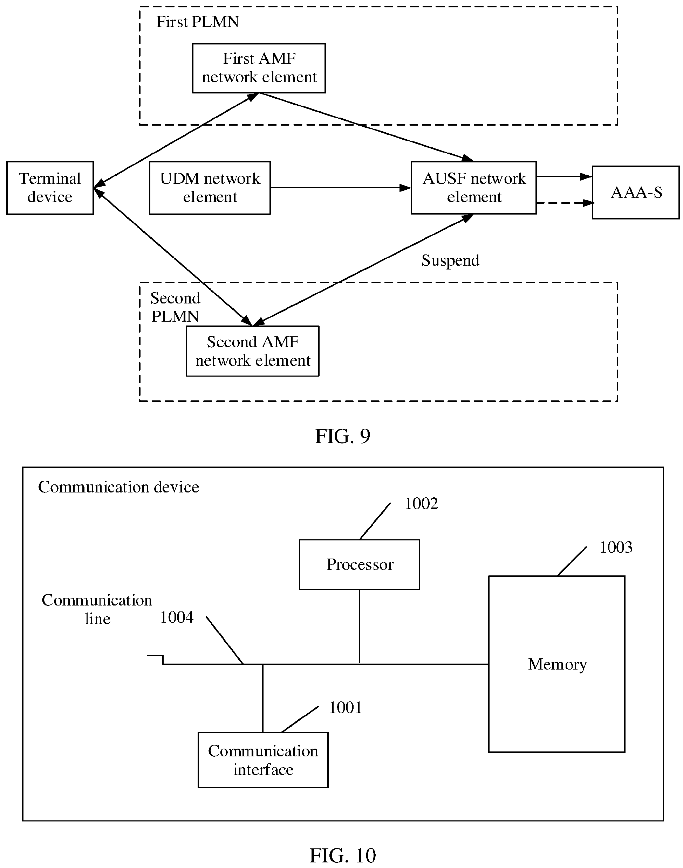

When allowed NSSAI for a first PLMN and a second PLMN-2 both include a same piece of S-NSSAI, and if subscription information of the S-NSSAI is changed, for example, the S-NSSAI on which a network slice specific authentication and authorization procedure does not need to be performed is changed to the S-NSSAI on which a network slice specific authentication and authorization procedure needs to be performed, after the UDM network element delivers new subscription information to the two AMF network elements, the two AMF network elements separately perform network slice specific authentication and authorization procedures on the same piece of S-NSAI. As a result, required signaling transmitted by the core network for authentication is redundant. The method 700 and the method 800 provide two methods. As shown in FIG. 9, it is assumed that a path from the terminal device to the AAA-S through the first AMF network element and the AUSF network element shown in FIG. 9 indicates the authentication procedure performed by the first AMF network element, where this authentication procedure is referred to as a first authentication procedure. Before the first authentication procedure ends, if the AUSF network element or the AAA-S also receives, from the second AMF network element, an authentication request on a same piece of S-NSSAI of a same terminal device, where this authentication procedure is referred to as a second authentication procedure, the AUSF network element suspends the second authentication procedure; or the AAA-S triggers the AUSF network element to suspend the second procedure until the first authentication procedure ends, and the AUSF network element directly returns, based on a result of the first authentication procedure, the authentication result of the S-NSSAI to the second AMF. This reduces signaling exchange.

The foregoing mainly describes the solutions provided in the embodiments of this application from perspectives of interaction between the first network element, the AMF network element, the AUSF network element, the AAA-S, and the UDM network element. It may be understood that, to implement the foregoing functions, the first network element, the AMF network element, the AUSF network element, the AAA-S, and the UDM network element include corresponding hardware structures and/or software modules for performing the functions. A person of ordinary skill in the art should be easily aware that, in combination with the examples described in the embodiments disclosed in this specification, modules and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that such an implementation goes beyond the scope of this application.

In terms of the hardware structure, the first network element, the AMF network element, the AUSF network element, the AAA-S, and the UDM network element in FIG. 3 to FIG. 9 may be implemented by one entity device, may be jointly implemented by a plurality of entity devices, or may be implemented by a logical function module in a physical device. This is not specifically limited in the embodiments of this application.

For example, the first network element, the AMF network element, the AUSF network element, the AAA-S, and the UDM network element may be implemented by a communication device in FIG. 10. FIG. 10 is a schematic diagram of a hardware structure of a communication device according to an embodiment of this application. The communication device includes a communication interface 1001 and a processor 1002, and may further include a memory 1003.

The communication interface 1001 is configured to communicate with another device or communication network by using any apparatus such as a transceiver.

The processor 1002 includes but is not limited to one or more of a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable logic gate array (field-programmable gate array, FPGA), generic array logic (generic array logic, GAL), or any combination thereof. The processor 1002 is responsible for a communication line 1004 and general processing, and may further provide various functions, including timing, peripheral interfacing, voltage regulation, power management, and another control function. The memory 1003 may be configured to store data used by the processor 1002 when the processor 1002 performs an operation.

The memory 1003 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory may exist independently, and is connected to the processor 1002 through the communication line 1004. The memory 1003 may alternatively be integrated with the processor 1002. If the memory 1003 and the processor 1002 are mutually independent components, the memory 1003 is connected to the processor 1002. For example, the memory 1003 and the processor 1002 may communicate with each other through the communication line. The communication interface 1001 may communicate with the processor 1002 through the communication line, or the communication interface 1001 may be directly connected to the processor 1002.

The communication line 1004 may include any quantity of interconnected buses and bridges, and the communication line 1004 links together various circuits including one or more processors 1002 represented by the processor 1002 and a memory represented by the memory 1003. The communication line 1004 may further link various other circuits such as a peripheral device, a voltage stabilizer, and a power management circuit. These are well known in the art, and therefore are not further described in this specification.

In a specific implementation, when the communication device is a first network element, the communication device may include:
a memory, configured to store computer-readable instructions;
a communication interface coupled to the memory, where the communication interface is configured to perform the following operation:
   obtaining a first authentication status of a target network slice of a terminal device from a user data management function UDM network element, where the first authentication status indicates a first authentication result of the target network slice, or the first authentication status indicates that no authentication procedure has been performed on the target network slice; and
   a processor, where the processor is coupled to the communication interface, and is configured to determine, based on the first authentication status obtained by the communication interface, whether to perform a first authentication procedure on the target network slice.

In a specific implementation, the processor is specifically configured to: when determining the first authentication result of the target network slice based on the first authentication status obtained by the communication interface, skip performing an authentication procedure on the target network slice; or when determining, based on the first authentication status obtained by the communication interface, that no authentication procedure has been performed on the target network slice, perform the first authentication procedure on the target network slice.

Optionally, the communication interface is further configured to notify the UDM network element of a second authentication status of the target network slice, where the second authentication status indicates a second authentication result corresponding to the first authentication procedure.

Optionally, the communication interface is further configured to notify the UDM network element of validity time of the second authentication status of the target network slice.

In a specific implementation, when the first network element is a mobility management function AMF network element, the communication interface is further configured to learn that the terminal device requests to access the target network slice.

Optionally, the processor is specifically configured to: when determining, based on the first authentication status obtained by the communication interface, that the first authentication result of the target network slice is a success, skip performing the first authentication procedure on the target network slice and determine that the terminal device is allowed to access the target network slice; or when determining, based on the first authentication status obtained by the communication interface, that the first authentication result of the target network slice is a failure, skip performing the first authentication procedure on the target network slice and determine that the terminal device is not allowed to access the target network slice.

Optionally, the communication interface is specifically configured to: request the UDM network element to send subscription data; and receive the subscription data and the first authentication status of the target network slice that are sent by the UDM network element.

Optionally, the communication interface is specifically configured to: send a request message to the UDM network element, where the request message is used to query the first authentication status of the target network slice; and receive a response message sent by the UDM network element, where the response message indicates the first authentication status of the target network slice.

In a specific implementation, when the first network element is an authentication server function AUSF network element, before obtaining the first authentication status of the target network slice of the terminal device from the user data management function UDM network element, the communication interface is further configured to receive a first message sent by a first mobility management function AMF network element, where the first message is used to request to perform the first authentication procedure.

Optionally, the processor is specifically configured to: when determining, based on the first authentication status, that the first authentication result of the target network slice is a success or a failure, determine not to perform the first authentication procedure on the target network slice, and send the first authentication result of the target network slice to the first AMF network element.

Optionally, the communication interface is specifically configured to: send a request message to the UDM network element, where the request message is used to query the first authentication status of the target network slice; and receive a response message sent by the UDM network element, where the response message indicates the first authentication status of the target network slice.

Optionally, the communication interface is further configured to: when the processor performs the first authentication procedure on the target network slice, receive a second message sent by a second mobility management function AMF network element, where the second message is used to request to perform the second authentication procedure on the target network slice of the first terminal device; the communication interface is further configured to send indication information to the second AMF network element, where the indication information is used to indicate that the second authentication procedure is suspended; and the communication interface is further configured to: after learning of a second authentication result of the target network slice, send the second authentication result of the target network slice to the second AMF network element.

In a specific implementation, when the communication device is a UDM network element, the communication device may include:
a memory, configured to store computer-readable instructions; and
a communication interface coupled to the memory, where the communication interface is configured to perform the following operations:
   learning of a first authentication status of a target network slice of a terminal device, where the first authentication status indicates a first authentication result of the target network slice, or the first authentication status indicates that no authentication procedure has been performed on the target network slice; and
   sending the first authentication status to a first network element.

Optionally, the communication interface is specifically configured to receive the first authentication status sent by a second network element, where the second network element is a third mobility management function AMF network element that provides a service for the terminal device when the terminal device accesses the target network slice by using a first public land mobile network PLMN, and the first authentication status is the first authentication result corresponding to a third authentication procedure performed by the second network element on the target network slice.

Optionally, the communication interface is specifically configured to receive the first authentication status sent by a third network element, where the third network element is an authentication server function AUSF network element that provides a service for the terminal device when the terminal device accesses the target network slice by using a first public land mobile network PLMN, and the first authentication status is the first authentication result corresponding to a third authentication procedure performed by a fourth network element on the target network slice.

Optionally, when the first network element is a first mobility management function AMF network element that provides a service for the terminal device or an authentication server function AUSF network element that provides a service for the terminal device when the terminal device accesses the target network slice by using a second public land mobile network PLMN, the communication interface is further configured to: receive a request message sent by the first network element, where the request message is used to query the first authentication status of the target network slice, and the communications interface is specifically configured to send a response message to the first network element, where the response message indicates the first authentication status of the target network slice.

Optionally, when the first network element is a first mobility management function AMF network element that provides a service for the terminal device when the terminal device accesses the target network slice by using a second public land mobile network PLMN, the communication interface is further configured to receive a request message sent by the first network element, where the request message is used to request subscription data, and the communication interface is specifically configured to send the first authentication status of the target network slice and the subscription data to the first network element.

Optionally, the communication interface is further configured to receive validity time of the first authentication status of the target network slice.

In a specific implementation, when the communication device is an AUSF network element, the communication device may further include:
a communication interface, configured to receive a first authentication request message sent by a first network element, where the first authentication request message is used to request a third network element to perform a first authentication procedure on a first network slice accessed by a terminal device.

Before the first authentication procedure ends, the communication interface is further configured to receive a second authentication request message sent by a second network element, where the second authentication request message is used to request a third network element to perform a second authentication procedure on the first network slice accessed by the first terminal device.

The communication interface is further configured to send indication information to the second network element, where the indication information is used to indicate that the second authentication procedure is suspended.

The communication interface is further configured to: obtain a first authentication result of the first authentication procedure, and send the first authentication result of the first authentication procedure to the second network element. The first network element is a first mobility management function AMF network element located in a first PLMN, and the second network element is a second mobility management function AMF network element located in a second PLMN.

In a specific implementation, when the communication device is an AAA-S, the communication device may further include:
a communication interface, configured to receive a first authentication request message sent by a first network element, where the first authentication request message is used to request a third network element to perform a first authentication procedure on a first network slice accessed by a terminal device.

Before the first authentication procedure ends, the communication interface is further configured to receive a second authentication request message sent by a second network element, where the second authentication request message is used to request a third network element to perform a second authentication procedure on the first network slice accessed by the first terminal device.

The communication interface is further configured to send indication information to the second network element, where the indication information is used to indicate that the second authentication procedure is suspended.

The communication interface is further configured to: obtain a first authentication result of the first authentication procedure, and send the first authentication result of the first authentication procedure to the second network element. The first network element and the second network element are authentication server function AUSF network elements located in a home public land mobile network HPLMN.

In this embodiment of this application, communication interfaces of the first network element, the AMF network element, the AUSF network element, the AAA-S, and the UDM network element may be considered as transceiver units. Processors that have processing functions and that are of the first network element, the AMF network element, the AUSF network element, the AAA-S, and the UDM network element are considered as processing units, and memories of the first network element, the AMF network element, the AUSF network element, the AAA-S, and the UDM network element are considered as storage units.

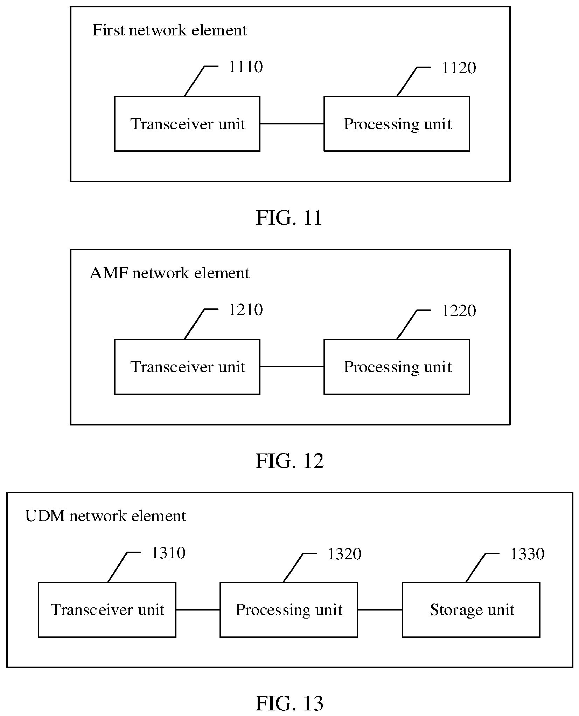

As shown in FIG. 11, the first network element may include a transceiver unit 1110 and a processing unit 1120. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1110 and that is configured to implement a receiving function may be considered as a receiving unit, and a component that is in the transceiver unit 1110 and that is configured to implement a sending function may be considered as a sending unit. In other words, the transceiver unit 1110 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit may sometimes also be referred to as a transmitter machine, a transmitter, a transmitter circuit, or the like.

In a specific implementation, the transceiver unit 1110 is configured to perform a transceiver operation on a first network element side in step 301 in FIG. 3, and/or the transceiver unit 1110 is further configured to perform another transceiver step on the first network element side in the corresponding embodiment in FIG. 3. The processing unit 1120 is configured to perform a processing operation on the first network element side in step 302 in FIG. 3, and/or the processing unit 1120 is further configured to perform another processing step on the first network element side in the corresponding embodiment in FIG. 3.

As shown in FIG. 12, the AMF network element may include a transceiver unit 1210 and a processing unit 1220. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit may sometimes also be referred to as a transmitter machine, a transmitter, a transmitter circuit, or the like.

In a specific implementation, the transceiver unit 1210 may be configured to perform transceiver operations on a first AMF network element side or a second AMF network element side in steps 401, 402, 404, 406, and 407 in FIG. 4, and/or the transceiver unit 1210 is further configured to perform other transceiver steps on the first AMF network element side or the second AMF network element side in the corresponding embodiment in FIG. 4. The processing unit 1220 is configured to perform processing operations on the first AMF network element side or the second AMF network element side in steps 403 and 408 in FIG. 4, and/or the processing unit 1220 is further configured to perform other processing steps on the first AMF network element side or the second AMF network element side in the corresponding embodiment in FIG. 4.

In a specific implementation, the transceiver unit 1210 may be configured to perform transceiver operations on a first AMF network element side or a second AMF network element side in steps 501, 502, 504, 507, 511, 512, 514, and 517 in FIG. 5A and FIG. 5B, and/or the transceiver unit 1210 is further configured to perform other transceiver steps on the first AMF network element side or the second AMF network element side in the corresponding embodiment in FIG. 5A and FIG. 5B. The processing unit 1220 is configured to perform processing operations on the first AMF network element side or the second AMF network element side in steps 503 and 513 in FIG. 5A and FIG. 5B, and/or the processing unit 1220 is further configured to perform other processing steps on the first AMF network element side or the second AMF network element side in the corresponding embodiment in FIG. 5A and FIG. 5B.

In a specific implementation, the transceiver unit 1210 may be configured to perform transceiver operations on a first AMF network element side or a second AMF network element side in steps 701, 702, 704, 707, 709, and 710 in FIG. 7, and/or the transceiver unit 1210 is further configured to perform other transceiver steps on the first AMF network element side or the second AMF network element side in the corresponding embodiment in FIG. 7. The processing unit 1220 is configured to perform processing operations on the first AMF network element side or the second AMF network element side in steps 703 and 711 in FIG. 7, and/or the processing unit 1220 is further configured to perform other processing steps on the first AMF network element side or the second AMF network element side in the corresponding embodiment in FIG. 7.

In a specific implementation, the transceiver unit 1210 may be configured to perform transceiver operations on a first AMF network element side or a second AMF network element side in steps 801, 802, 804, 807, 808, 810, and 811 in FIG. 8, and/or the transceiver unit 1210 is further configured to perform other transceiver steps on the first AMF network element side or the second AMF network element side in the corresponding embodiment in FIG. 8. The processing unit 1220 is configured to perform processing operations on the first AMF network element side or the second AMF network element side in steps 803 and 812 in FIG. 8, and/or the processing unit 1220 is further configured to perform other processing steps on the first AMF network element side or the second AMF network element side in the corresponding embodiment in FIG. 8.

As shown in FIG. 13, the UDM network element may include a transceiver unit 1310 and a processing unit 1320. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. In other words, the transceiver unit 1310 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit may sometimes also be referred to as a transmitter machine, a transmitter, a transmitter circuit, or the like.

In a specific implementation, the transceiver unit 1310 is configured to perform a transceiver operation on a UDM network element side in step 301 in FIG. 3, and/or the transceiver unit 1310 is further configured to perform another transceiver step on the UDM network element side in the corresponding embodiment in FIG. 3.

In a specific implementation, the transceiver unit 1310 is configured to perform transceiver operations on the UDM network element side in steps 401 and 405 in FIG. 4, and/or the transceiver unit 1310 is further configured to perform another transceiver step on the UDM network element side in the corresponding embodiment in FIG. 4. The processing unit 1320 is configured to perform a processing operation on the UDM network element side in step 405 in FIG. 4, and/or the processing unit 1320 is further configured to perform another processing step on the UDM network element side in the corresponding embodiment in FIG. 4. The storage unit 1330 is configured to perform a storage operation/an update operation on the UDM network element side in step 405 in FIG. 4, and/or the storage unit 1330 is further configured to perform another storage step on the UDM network element side in the corresponding embodiment in FIG. 4.

In a specific implementation, the transceiver unit 1310 is configured to perform transceiver operations on the UDM network element side in steps 502, 505, 509, 510, 512, 519, and 520 in FIG. 5A and FIG. 5B, and/or the transceiver unit 1310 is further configured to perform another transceiver step on the UDM network element side in the corresponding embodiment in FIG. 5A and FIG. 5B. The processing unit 1320 is configured to perform processing operations on the UDM network element side in steps 510 and 520 in FIG. 5A and FIG. 5B, and/or the processing unit 1320 is further configured to perform another processing step on the UDM network element side in the corresponding embodiment in FIG. 5A and FIG. 5B. The storage unit 1330 is configured to perform a storage operation/an update operation on the UDM network element side in steps 510 and 520 in FIG. 5A and FIG. 5B, and/or the storage unit 1330 is further configured to perform another storage step on the UDM network element side in the corresponding embodiment in FIG. 5A and FIG. 5B.

In a specific implementation, the transceiver unit 1310 is configured to perform transceiver operations on the UDM network element side in steps 701 and 702 in FIG. 7, and/or the transceiver unit 1310 is further configured to perform another transceiver step on the UDM network element side in the corresponding embodiment in FIG. 7.

In a specific implementation, the transceiver unit 1310 is configured to perform transceiver operations on the UDM network element side in steps 801 and 802 in FIG. 8, and/or the transceiver unit 1310 is further configured to perform another transceiver step on the UDM network element side in the corresponding embodiment in FIG. 8.

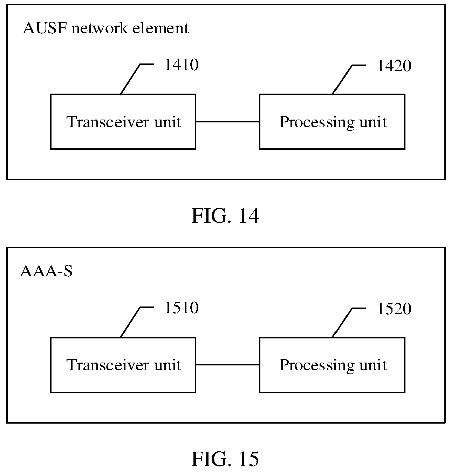

As shown in FIG. 14, the AUSF network element may include a transceiver unit 1410 and a processing unit 1420. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1410 and that is configured to implement a receiving function may be considered as a receiving unit, and a component that is in the transceiver unit 1410 and that is configured to implement a sending function may be considered as a sending unit. In other words, the transceiver unit 1410 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit may sometimes also be referred to as a transmitter machine, a transmitter, a transmitter circuit, or the like.

In a specific implementation, the transceiver unit 1410 is configured to perform transceiver operations on an AUSF network element side in steps 504, 505, 507, 508, 509, 514, 515, 517, 518, and 519 in FIG. 5A and FIG. 5B, and/or the transceiver unit 1410 is further configured to perform another transceiver step on the AUSF network element side in the corresponding embodiment in FIG. 5A and FIG. 5B. The processing unit 1420 is configured to perform processing operations on the AUSF network element side in steps 506 and 516 in FIG. 5A and FIG. 5B, and/or the processing unit 1420 is further configured to perform another processing step on the AUSF network element side in the corresponding embodiment in FIG. 5A and FIG. 5B.

In a specific implementation, the transceiver unit 1410 is configured to perform transceiver operations on the AUSF network element side in steps 704, 705, 707, 709, and 710 in FIG. 7, and/or the transceiver unit 1410 is further configured to perform another transceiver step on the AUSF network element side in the corresponding embodiment in FIG. 7. The processing unit 1420 is configured to perform a processing operation on the AUSF network element side in step 708 in FIG. 7, and/or the processing unit 1420 is further configured to perform another processing step on the AUSF network element side in the corresponding embodiment in FIG. 7.

In a specific implementation, the transceiver unit 1410 is configured to perform transceiver operations on the AUSF network element side in steps 804, 805, 807, 809, 810, and 811 in FIG. 8, and/or the transceiver unit 1410 is further configured to perform another transceiver step on the AUSF network element side in the corresponding embodiment in FIG. 8.

As shown in FIG. 15, the AAA-S may include a transceiver unit 1510 and a processing unit 1520. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1510 and that is configured to implement a receiving function may be considered as a receiving unit, and a component that is in the transceiver unit 1510 and that is configured to implement a sending function may be considered as a sending unit. In other words, the transceiver unit 1510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit may sometimes also be referred to as a transmitter machine, a transmitter, a transmitter circuit, or the like.

In a specific implementation, the transceiver unit 1510 is configured to perform transceiver operations on an AAA-S side in steps 508 and 518 in FIG. 5A and FIG. 5B, and/or the transceiver unit 1510 is further configured to perform another transceiver step on the AAA-S side in the corresponding embodiment in FIG. 5A and FIG. 5B.

In a specific implementation, the transceiver unit 1510 is configured to perform a transceiver operation on the AAA-S side in step 705 in FIG. 7, and/or the transceiver unit 1510 is further configured to perform another transceiver step on the AAA-S side in the corresponding embodiment in FIG. 7.

In a specific implementation, the transceiver unit 1510 is configured to perform transceiver operations on the AAA-S side in steps 805, 808, and 809 in FIG. 8, and/or the transceiver unit 1510 is further configured to perform another transceiver step on the AAA-S side in the corresponding embodiment in FIG. 8.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

A person of ordinary skill in the art may understand that all or some of the steps of the methods in the embodiments may be implemented by a program instructing related hardware. The program may be stored in a computer-readable storage medium. The storage medium may include a ROM, a RAM, a magnetic disk, or an optical disc, or the like.

The foregoing describes in detail the communication method, the network element, the system, and the storage medium provided in the embodiments of this application. Specific examples are used in this specification to describe principles and implementations of this application. The descriptions in the foregoing embodiments are merely used to help understand the method and a core idea of this application. In addition, a person of ordinary skill in the art may make changes in specific implementations and application scopes based on the ideas of this application. In conclusion, content of this specification should not be construed as a limitation on this application.

## Claims

1. A communication method (300), comprising:
obtaining (301), by a first network element, a first authentication status of a target network slice of a first terminal device from a data management network element, wherein the first authentication status indicates a first authentication result of the target network slice, or the first authentication status indicates that no authentication procedure has been performed on the target network slice; and
determining (302), by the first network element based on the first authentication status, whether to perform a first authentication procedure on the target network slice;
wherein when the first network element is a mobility management network element, before the obtaining, by the first network element, the first authentication status of the target network slice of the first terminal device from the data management network element, the method further comprises:
learning, by the first network element, that the first terminal device requests to access the target network slice; and
wherein the determining, by the first network element based on the first authentication status, not to perform the first authentication procedure on the target network slice comprises:
when the first network element determines, based on the first authentication status, that the first authentication result of the target network slice is a success, skipping performing, by the first network element, the first authentication procedure on the target network slice, and determining that the first terminal device is allowed to access the target network slice;
when the first network element determines, based on the first authentication status, that the first authentication result of the target network slice is a failure, skipping performing, by the first network element, the first authentication procedure on the target network slice, and determining that the first terminal device is not allowed to access the target network slice.

2. The communication method according to claim 1, wherein the determining, by the first network element based on the first authentication status, whether to perform a first authentication procedure on the target network slice comprises:
when the first network element determines the first authentication result of the target network slice based on the first authentication status, skipping performing, by the first network element, an authentication procedure on the target network slice; or
when the first network element determines, based on the first authentication status, that no authentication procedure has been performed on the target network slice, performing, by the first network element, the first authentication procedure on the target network slice.

3. The communication method according to claim 1, wherein the obtaining, by a first network element, a first authentication status of a target network slice of a first terminal device from a data management network element comprises:
requesting, by the first network element, subscription data from the data management network element; and
receiving, by the first network element, the subscription data and the first authentication status of the target network slice that are sent by the data management network element.

4. The communication method according to claim 3, wherein the obtaining, by a first network element, a first authentication status of a target network slice of a first terminal device from a data management network element comprises:
sending, by the first network element, a request message to the data management network element, wherein the request message is used to query the first authentication status of the target network slice; and
receiving, by the first network element, a response message sent by the data management network element, wherein the response message indicates the first authentication status of the target network slice.

5. A first network element, comprising:
a communication interface, configured to obtain a first authentication status of a target network slice of a first terminal device from a data management network element, wherein the first authentication status indicates a first authentication result of the target network slice, or the first authentication status indicates that no authentication procedure has been performed on the target network slice; and
a processor, wherein the processor is coupled to the communication interface, and is configured to determine, based on the first authentication status obtained by the communication interface, whether to perform a first authentication procedure on the target network slice;
wherein the processor is further configured to:
when determining the first authentication result of the target network slice based on the first authentication status obtained by the communication interface, skip performing an authentication procedure on the target network slice;
when determining, based on the first authentication status obtained by the communication interface, that no authentication procedure has been performed on the target network slice, perform, by the first network element, the first authentication procedure on the target network slice; and
wherein when the first network element is a mobility management network element,
before obtaining the first authentication status of the target network slice of the first terminal device from the data management network element, the communication interface is further configured to learn that the first terminal device requests to access the target network slice.

6. The first network element according to claim 5, wherein the communication interface is specifically configured to:
learn of a registration request of the first terminal device;
request, based on the registration request, the data management network element to send subscription data; and
receive the subscription data and the first authentication status of the target network slice that are sent by the data management network element.

7. The first network element according to claim 5, wherein the communication interface is specifically configured to:
send a request message to the data management network element, wherein the request message is used to query the first authentication status of the target network slice; and
receive a response message sent by the data management network element, wherein the response message indicates the first authentication status of the target network slice.

## Patentansprüche

1. Kommunikationsverfahren (300), umfassend:
Erlangen (301) eines ersten Authentifizierungsstatus eines Zielnetzwerk-Slice einer ersten Endgerätevorrichtung von einem Datenverwaltungs-Netzwerkelement durch ein erstes Netzwerkelement, wobei der erste Authentifizierungsstatus ein erstes Authentifizierungsergebnis des Zielnetzwerk-Slice anzeigt, oder der erste Authentifizierungsstatus anzeigt, dass keine Authentifizierungsprozedur an dem Zielnetzwerk-Slice durchgeführt wurde; und
Bestimmen (302) durch das erste Netzwerkelement auf der Grundlage des ersten Authentifizierungsstatus, ob eine erste Authentifizierungsprozedur auf dem Zielnetzwerk-Slice durchgeführt werden soll;
wobei, wenn das erste Netzwerkelement ein Mobilitätsmanagement-Netzwerkelement ist, das Verfahren vor dem Erlangen des ersten Authentifizierungsstatus des Zielnetzwerk-Slices der ersten Endgerätevorrichtung von dem Datenverwaltungs-Netzwerkelement durch das erste Netzwerkelement ferner Folgendes umfasst:
Lernen durch das erste Netzwerkelement, dass die erste Endgerätevorrichtung den Zugriff auf den Zielnetzwerk-Slice anfordert; und
wobei das Bestimmen durch das erste Netzwerkelement auf der Grundlage des ersten Authentifizierungsstatus, die erste Authentifizierungsprozedur auf dem Zielnetzwerk-Slice nicht durchzuführen, Folgendes umfasst:
wenn das erste Netzwerkelement auf der Grundlage des ersten Authentifizierungsstatus bestimmt, dass das erste Authentifizierungsergebnis des Zielnetzwerk-Slice ein Erfolg ist, Überspringen der Durchführung der ersten Authentifizierungsprozedur auf dem Zielnetzwerk-Slice durch das erste Netzwerkelement und Bestimmen, dass der ersten Endgerätevorrichtung der Zugriff auf den Zielnetzwerk-Slice erteilt wird;
wenn das erste Netzwerkelement auf der Grundlage des ersten Authentifizierungsstatus bestimmt, dass das erste Authentifizierungsergebnis des Zielnetzwerk-Slice fehlschlägt, Überspringen der Durchführung der ersten Authentifizierungsprozedur auf dem Zielnetzwerk-Slice durch das erste Netzwerkelement und Bestimmen, dass der ersten Endgerätevorrichtung der Zugriff auf den Zielnetzwerk-Slice nicht erteilt wird;

2. Kommunikationsverfahren nach Anspruch **1,** wobei das Bestimmen durch das erste Netzwerkelement auf der Grundlage des ersten Authentifizierungsstatus, ob eine erste Authentifizierungsprozedur auf dem Zielnetzwerk-Slice durchgeführt werden soll, Folgendes umfasst:
wenn das erste Netzwerkelement das erste Authentifizierungsergebnis der Zielnetzwerk-Slice auf der Grundlage des ersten Authentifizierungsstatus bestimmt, Überspringen der Durchführung einer Authentifizierungsprozedur auf dem Zielnetzwerk-Slice durch das erste Netzwerkelement; oder
wenn das erste Netzwerkelement auf der Grundlage des ersten Authentifizierungsstatus bestimmt, dass auf dem Zielnetzwerk-Slice keine Authentifizierungsprozedur durchgeführt wurde, Durchführen der ersten Authentifizierungsprozedur auf dem Zielnetzwerk-Slice durch das erste Netzwerkelement.

3. Kommunikationsverfahren nach Anspruch 1, wobei das Erlangen eines ersten Authentifizierungsstatus eines Zielnetzwerk-Slice einer ersten Endgerätevorrichtung durch ein erstes Netzwerkelement von einem Datenverwaltungs-Netzwerkelement Folgendes umfasst:
Anfordern von Abonnementdaten von dem Datenverwaltungs-Netzwerkelement durch das erste Netzwerkelement; und
Empfangen der Abonnementdaten und des ersten Authentifizierungsstatus des Zielnetzwerk-Slice, die von dem Datenverwaltungs-Netzwerkelement gesendet werden, durch das erste Netzwerkelement.

4. Kommunikationsverfahren nach Anspruch 3, wobei das Erlangen eines ersten Authentifizierungsstatus eines Zielnetzwerk-Slice einer ersten Endgerätevorrichtung durch ein erstes Netzwerkelement von einem Datenverwaltungs-Netzwerkelement Folgendes umfasst:
Senden einer Anforderungsnachricht durch das erste Netzwerkelement an das Datenverwaltungs-Netzwerkelement, wobei die Anforderungsnachricht zur Abfrage des ersten Authentifizierungsstatus des Zielnetzwerk-Slice verwendet wird; und
Empfangen einer Antwortnachricht, die von dem Datenverwaltungs-Netzwerkelement gesendet wurde, durch das erste Netzwerkelement, wobei die Antwortnachricht den ersten Authentifizierungsstatus des Zielnetzwerk-Slice angibt.

5. Erstes Netzwerkelement, Folgendes umfassend:
eine Kommunikationsschnittstelle, die dazu konfiguriert ist, einen ersten Authentifizierungsstatus eines Zielnetzwerk-Slice einer ersten Endgerätevorrichtung von einem Datenverwaltungs-Netzwerkelement durch ein erstes Netzwerkelement zu erlangen, wobei der erste Authentifizierungsstatus ein erstes Authentifizierungsergebnis des Zielnetzwerk-Slice anzeigt, oder der erste Authentifizierungsstatus anzeigt, dass keine Authentifizierungsprozedur an dem Zielnetzwerk-Slice durchgeführt wurde; und
einen Prozessor, wobei der Prozessor mit der Kommunikationsschnittstelle gekoppelt ist und dazu konfiguriert ist, auf der Grundlage des von der Kommunikationsschnittstelle erlangten ersten Authentifizierungsstatus zu bestimmen, ob eine erste Authentifizierungsprozedur auf dem Zielnetzwerk-Slice durchgeführt werden soll; wobei der Prozessor ferner zu Folgendem konfiguriert ist:
beim Bestimmen des ersten Authentifizierungsergebnisses des Zielnetzwerk-Slice auf der Grundlage des von der Kommunikationsschnittstelle erlangten ersten Authentifizierungsstatus, Überspringen der Durchführung einer Authentifizierungsprozedur auf dem Zielnetzwerk-Slice;
wenn auf der Grundlage des von der Kommunikationsschnittstelle erlangten ersten Authentifizierungsstatus bestimmt wird, dass auf dem Zielnetzwerk-Slice keine Authentifizierungsprozedur durchgeführt wurde, Durchführen durch das erste Netzwerkelement der ersten Authentifizierungsprozedur auf dem Zielnetzwerk-Slice; und
wobei, wenn das erste Netzwerkelement ein Mobilitätsverwaltungs-Netzwerkelement ist,
die Kommunikationsschnittstelle vor dem Erlangen des ersten Authentifizierungsstatus des Zielnetzwerk-Slice der ersten Endgerätevorrichtung von dem Datenverwaltungs-Netzwerkelement ferner dazu konfiguriert ist, zu lernen, dass die erste Endgerätevorrichtung Zugriff auf den Zielnetzwerk-Slice anfordert.

6. Erstes Netzwerkelement nach Anspruch 5, wobei die Kommunikationsschnittstelle speziell zu Folendem konfiguriert ist:
Lernen einer Registrierungsanforderung der ersten Endgerätevorrichtung;
Anfordern auf der Grundlage der Registrierungsanforderung des Datenverwaltungs-Netzwerkelements Abonnementdaten zu senden; und
Empfangen der Abonnementdaten und des ersten Authentifizierungsstatus des Zielnetzwerk-Slice, die von dem Datenverwaltungs-Netzwerkelement gesendet werden.

7. Erstes Netzwerkelement nach Anspruch 5, wobei die Kommunikationsschnittstelle speziell zu Folgendem konfiguriert ist:
Senden einer Anforderungsnachricht an das Datenverwaltungs-Netzwerkelement, wobei die Anforderungsnachricht zur Abfrage des ersten Authentifizierungsstatus des Zielnetzwerk-Slice verwendet wird; und
Empfangen einer Antwortnachricht, die von dem Datenverwaltungs-Netzwerkelement gesendet wurde, wobei die Antwortnachricht den ersten Authentifizierungsstatus des Zielnetzwerk-Slice angibt.

## Revendications

1. Procédé de communication (300), comprenant :
l'obtention (301), par un premier élément de réseau, d'un premier état d'authentification d'une tranche de réseau cible d'un premier dispositif terminal à partir d'un élément de réseau de gestion de données, dans lequel le premier état d'authentification indique un premier résultat d'authentification de la tranche de réseau cible, ou le premier état d'authentification indique qu'aucune procédure d'authentification n'a été réalisée sur la tranche de réseau cible ; et
le fait de déterminer (302), par le premier élément de réseau sur la base du premier état d'authentification, s'il convient de réaliser une première procédure d'authentification sur la tranche de réseau cible ;
dans lequel lorsque le premier élément de réseau est un élément de réseau de gestion de mobilité, avant l'obtention, par le premier élément de réseau, du premier état d'authentification de la tranche de réseau cible du premier dispositif terminal à partir de l'élément de réseau de gestion de données, le procédé comprend également :
le fait d'apprendre, par le premier élément de réseau, que le premier dispositif terminal demande à accéder à la tranche de réseau cible ; et
dans lequel la détermination, par le premier élément de réseau sur la base du premier état d'authentification, de ne pas réaliser la première procédure d'authentification sur la tranche de réseau cible comprend :
lorsque le premier élément de réseau détermine, sur la base du premier état d'authentification, que le premier résultat d'authentification de la tranche de réseau cible est un succès, la non-réalisation, par le premier élément de réseau, de la première procédure d'authentification sur la tranche de réseau cible, et la détermination que le premier dispositif terminal est autorisé à accéder à la tranche de réseau cible ;
lorsque le premier élément de réseau détermine, sur la base du premier état d'authentification, que le premier résultat d'authentification de la tranche de réseau cible est un échec, la non-réalisation, par le premier élément de réseau, de la première procédure d'authentification sur la tranche de réseau cible, et la détermination que le premier dispositif terminal n'est pas autorisé à accéder à la tranche de réseau cible.

2. Procédé de communication selon la revendication 1, dans lequel le fait de déterminer, par le premier élément de réseau sur la base d'un premier état d'authentification, s'il convient de réaliser une première procédure d'authentification sur la tranche de réseau cible comprend :
lorsque le premier élément de réseau détermine le premier résultat d'authentification de la tranche de réseau cible sur la base du premier état d'authentification, la non-réalisation, par le premier élément de réseau, d'une procédure d'authentification sur la tranche de réseau cible ; ou
lorsque le premier élément de réseau détermine, sur la base du premier état d'authentification, qu'aucune procédure d'authentification n'a été réalisée sur la tranche de réseau cible, la réalisation, par le premier élément de réseau, de la première procédure d'authentification sur la tranche de réseau cible.

3. Procédé de communication selon la revendication 1, dans lequel l'obtention, par un premier élément de réseau, d'un premier état d'authentification d'une tranche de réseau cible d'un premier dispositif terminal à partir d'un élément de réseau de gestion de données comprend :
la demande, par le premier élément de réseau, de données d'abonnement à partir de l'élément de réseau de gestion de données ; et
la réception, par le premier élément de réseau, des données d'abonnement et du premier état d'authentification de la tranche de réseau cible qui sont envoyés par l'élément de réseau de gestion de données.

4. Procédé de communication selon la revendication 3, dans lequel l'obtention, par un premier élément de réseau, d'un premier état d'authentification d'une tranche de réseau cible d'un premier dispositif terminal à partir d'un élément de réseau de gestion de données comprend :
l'envoi, par le premier élément de réseau, d'un message de demande à l'élément de réseau de gestion de données, dans lequel le message de demande est utilisé pour interroger le premier état d'authentification de la tranche de réseau cible ; et
la réception, par le premier élément de réseau, d'un message de réponse envoyé par l'élément de réseau de gestion de données, dans lequel le message de réponse indique le premier état d'authentification de la tranche de réseau cible.

5. Premier élément de réseau, comprenant :
une interface de communication, configurée pour obtenir un premier état d'authentification d'une tranche de réseau cible d'un premier dispositif terminal à partir d'un élément de réseau de gestion de données, dans lequel le premier état d'authentification indique un premier résultat d'authentification de la tranche de réseau cible, ou le premier état d'authentification indique qu'aucune procédure d'authentification n'a été réalisée sur la tranche de réseau cible ; et
un processeur, dans lequel le processeur est couplé à l'interface de communication, et est configuré pour déterminer, sur la base du premier état d'authentification obtenu par l'interface de communication, s'il convient de réaliser une première procédure d'authentification sur la tranche de réseau cible ; dans lequel le processeur est également configuré pour :
lors de la détermination du premier résultat d'authentification de la tranche de réseau cible sur la base du premier état d'authentification obtenu par l'interface de communication, ne pas réaliser une procédure d'authentification sur la tranche de réseau cible ;
lors de la détermination, sur la base du premier état d'authentification obtenu par l'interface de communication, qu'aucune procédure d'authentification n'a été réalisée sur la tranche de réseau cible, réaliser, par le premier élément de réseau, la première procédure d'authentification sur la tranche de réseau cible ; et
dans lequel lorsque le premier élément de réseau est un élément de réseau de gestion de la mobilité,
avant d'obtenir le premier état d'authentification de la tranche de réseau cible du premier dispositif terminal à partir de l'élément de réseau de gestion de données, l'interface de communication est également configurée pour apprendre que le premier dispositif terminal demande à accéder à la tranche de réseau cible.

6. Premier élément de réseau selon la revendication 5, dans lequel l'interface de communication est spécifiquement configurée pour :
apprendre l'existence d'une demande d'enregistrement du premier dispositif terminal ;
demander, sur la base de la demande d'enregistrement, à l'élément du réseau de gestion de données d'envoyer des données d'abonnement ; et
recevoir les données d'abonnement et le premier état d'authentification de la tranche de réseau cible qui sont envoyés par l'élément de réseau de gestion de données.

7. Premier élément de réseau selon la revendication 5, dans lequel l'interface de communication est spécifiquement configurée pour :
envoyer un message de demande à l'élément de réseau de gestion de données, dans lequel le message de demande est utilisé pour interroger le premier état d'authentification de la tranche de réseau cible ; et
recevoir un message de réponse envoyé par l'élément de réseau de gestion de données, dans lequel le message de réponse indique le premier état d'authentification de la tranche de réseau cible.
